(19) Europäisches Patentamt
European Patent Office
Office européen des brevets

(11) EP 4 079 828 A1

(12) **EUROPEAN PATENT APPLICATION**

(43) Date of publication:
**26.10.2022 Bulletin 2022/43**

(21) Application number: **22170861.3**

(22) Date of filing: **25.03.2019**

(51) International Patent Classification (IPC):
***C10L 1/222*** *(2006.01)* ***C10L 1/2383*** *(2006.01)*
***C10L 10/02*** *(2006.01)*

(52) Cooperative Patent Classification (CPC):
**C10L 1/2222; C10L 1/2383; C10L 10/02;**
C10L 2200/0423; C10L 2270/023

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2018 GB 201805238**

(62) Document number(s) of the earlier application(s) in accordance with Art. 76 EPC:
**19714766.3 / 3 775 112**

(71) Applicant: **Innospec Limited**
**Ellesmere Port, Cheshire CH65 4EY (GB)**

(72) Inventors:
- **MULQUEEN, Simon**
**Ellesmere Port, Cheshire CH65 4EY (GB)**
- **WOODALL, Keith**
**Ellesmere Port, Cheshire CH65 4EY (GB)**

(74) Representative: **Appleyard Lees IP LLP**
**15 Clare Road**
**Halifax HX1 2HY (GB)**

Remarks:
This application was filed on 29-04-2022 as a divisional application to the application mentioned under INID code 62.

(54) **COMPOSITION, METHOD AND USE**

(57) A method of reducing particulate emissions from a direct injection spark ignition engine, the method comprising combusting in the engine a gasoline composition comprising as an additive a quaternary ammonium compound.

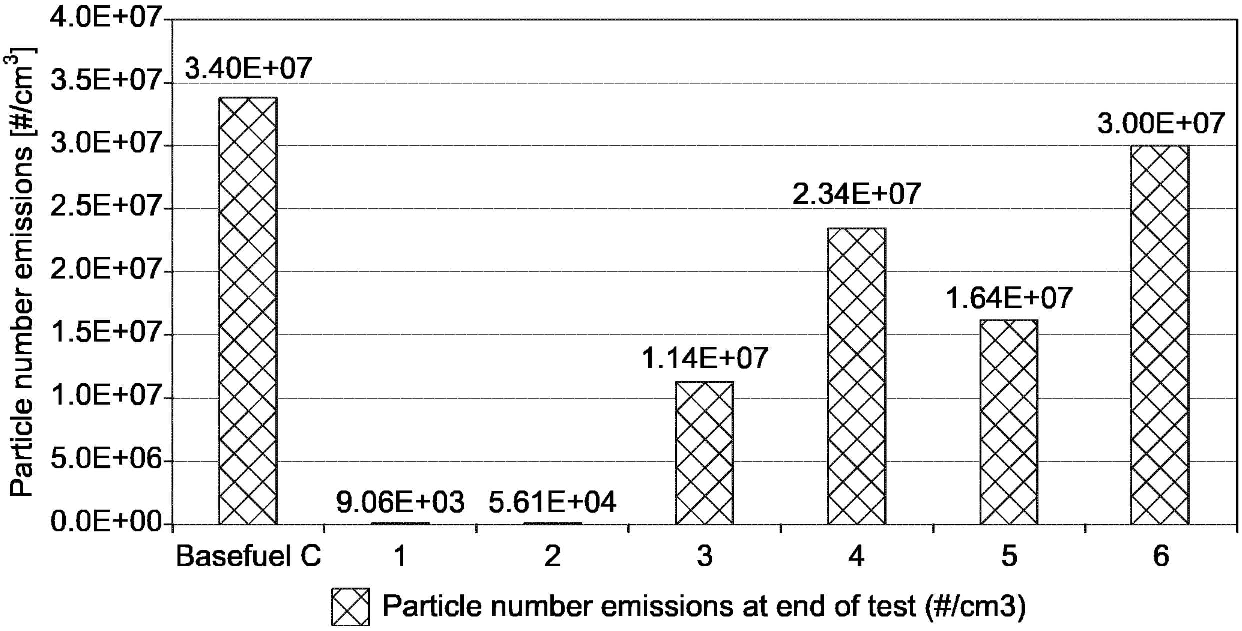


*FIG. 1*

EP 4 079 828 A1

## Description

The present invention relates to fuel compositions, and to methods and uses relating thereto. In particular, the invention relates to additives for reducing particulate emissions in spark ignition engines.

With over a hundred years of development the spark ignition (SI) engine has become a highly tuned piece of engineering. As the SI engine has become more highly tuned it has become more sensitive to variations in its performance. The performance of such engines can change with use as deposits build up on certain components and through wear of other components. These changes in construction may not only change parameters such as power output and overall efficiency; they can also significantly alter the pollutant emissions produced. To try and minimise these time-related changes to an engine's performance fuel additives have been developed to minimise wear and deposit build-up phenomena. Examples include anti valve seat recession additives to reduce wear and detergents to reduce deposit build-up.

Efforts to improve efficiency and reduce emissions has led to the development of increasingly sophisticated engines.

Engine designers have developed high performance engines which include injection systems where the fuel is injected directly into the cylinder. Such engines are alternatively known as direct injection spark ignition (DISI), direct injection gasoline (DIG), gasoline direct injection (GDI), etc. Various additives have been developed for such engines to reduce wear and for deposit control. Considerable work has also been carried out to control emissions from such engines, especially carbon monoxide and $NO_x$ in exhaust gases.

It is common to include catalytic convertors in the exhaust system of a direct injection gasoline engine. These typically include three way catalytic converters which reduce the concentrations of hydrocarbons, carbon monoxide and $NO_x$ species released into the atmosphere.

In diesel engines it is common to include a diesel particulate filter in the exhaust system. However, the emission of particulates from direct ignition gasoline engines is not routinely monitored and systems are not currently in place to reduce particulate emissions from such engines.

Direct Injection Spark Ignition engines do however produce particulates, albeit in a lower concentration than many diesel engines. These particulates are known to be harmful to human health and to have a detrimental environmental impact.

There is thus a need to reduce particulate emissions from spark ignition engines and it is expected that legislation in the coming years will mandate lower particulate emissions.

The present invention seeks to provide means for reducing particulate emissions from direct injection spark ignition engines.

According to a first aspect of the present invention there is provided a method of reducing particulate emissions from a direct injection spark ignition engine, the method comprising combusting in the engine a gasoline composition comprising as an additive a quaternary ammonium compound.

According to a second aspect of the present invention there is provided the use of a quaternary ammonium compound as an additive in a gasoline composition to reduce particulate emissions from a direct injection spark ignition engine.

Preferred features of the first and second aspects of the invention will now be described. Any feature of any aspect may be combined with any feature of any other aspect as appropriate.

The present invention relates to a method and a use involving a quaternary ammonium compound as a fuel additive. The additive may be referred to herein as "the additive of the present invention", "the quaternary ammonium compound" or as "the quaternary ammonium salt additive".

The quaternary ammonium salt additive may comprise a single compound. In some embodiments mixtures containing more than one quaternary ammonium compound may be used. References herein to "an additive" of the invention or "the additive" include mixtures comprising two or more such compounds.

The quaternary ammonium salt additive is suitably the reaction product of a nitrogen-containing species having at least one tertiary amine group and a quaternising agent.

The nitrogen-containing species having at least one tertiary amine group may be selected from any compound including a tertiary amine functional group.

Suitably the nitrogen-containing species having at least one tertiary amine group may be selected from:

(i) the reaction product of a hydrocarbyl-substituted acylating agent and a compound having at least one tertiary amine group and a primary amine, secondary amine or alcohol group;

(ii) a Mannich reaction product comprising a tertiary amine group;

(iii) a polyalkylene substituted amine having at least one tertiary amine group;

(iv) a tertiary amine of formula $R^1R^2R^3N$, wherein each of $R^1$, $R^2$ and $R^3$ is independently an optionally substituted alkyl, alkenyl or aryl group;

(v) a cyclic tertiary amine; and

(vi) a polyether compound.

The nitrogen-containing species having at least one tertiary amine group is reacted with a quaternising agent. Any suitably quaternising agent may be used.

Suitable quaternising agents include esters of a carboxylic acid, dialkyl sulfates, benzyl halides, hydrocarbyl substituted carbonates, epoxides optionally in combination with an acid, alkyl halides, alkyl sulfonates, sultones, hydrocarbyl substituted phosphates, hydrocarbyl substituted borates, alkyl nitrites, alkyl nitrates, hydroxides, N-oxides or mixtures thereof.

In some embodiments the nitrogen-containing species having at least one tertiary amine group is (i) the reaction product of a hydrocarbyl-substituted acylating agent and a compound comprising at least one tertiary amine group and a primary amine, secondary amine or alcohol group.

The hydrocarbyl substituted acylating agent may be based on a hydrocarbyl substituted mono-di- or polycarboxylic acid or a reactive equivalent thereof. Preferably the hydrocarbyl substituted acylating agent is a hydrocarbyl substituted succinic acid compound, for example a succinic acid or succinic anhydride.

The hydrocarbyl substituent preferably comprises at least 10, more preferably at least 12, for example 30 or 50 carbon atoms. It may comprise up to about 200 carbon atoms. Preferably the hydrocarbyl substituent has a number average molecular weight (Mn) of between 170 to 2800, for example from 250 to 1500, preferably from 450 to 1500 and more preferably 450 to 1100. An Mn of 700 to 1300 is especially preferred.

The hydrocarbyl based substituents may be made from homo- or interpolymers (e.g. copolymers, terpolymers) of mono- and di-olefins having 2 to 10 carbon atoms, for example ethylene, propylene, butane-1, isobutene, butadiene, isoprene, 1-hexene, 1-octene, etc. Preferably these olefins are 1-monoolefins. The hydrocarbyl substituent may also be derived from the halogenated (e.g. chlorinated or brominated) analogs of such homo- or interpolymers. Alternatively the substituent may be made from other sources, for example monomeric high molecular weight alkenes (e.g. 1-tetracontene) and chlorinated analogs and hydrochlorinated analogs thereof, aliphatic petroleum fractions, for example paraffin waxes and cracked and chlorinated analogs and hydrochlorinated analogs thereof, white oils, synthetic alkenes for example produced by the Ziegler-Natta process (e.g. poly(ethylene) greases) and other sources known to those skilled in the art. Any unsaturation in the substituent may if desired be reduced or eliminated by hydrogenation according to procedures known in the art.

Suitably component (i) is the reaction product of a hydrocarbyl-substituted succinic acid derivative and an alcohol or amine also including a tertiary amine group.

As used herein, the term "hydrocarbyl substituent" or "hydrocarbyl group" is used in its ordinary sense, which is well-known to those skilled in the art. Specifically, it refers to a group having a carbon atom directly attached to the remainder of the molecule and having predominantly hydrocarbon character. Examples of hydrocarbyl groups include:

(i) hydrocarbon groups, that is, aliphatic (which may be saturated or unsaturated, linear or branched, e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form a ring);

(ii) substituted hydrocarbon groups, that is, substituents containing non-hydrocarbon groups which, in the context of this invention, do not alter the predominantly hydrocarbon nature of the substituent (e.g., halo (e.g. chloro,fluoro or bromo), hydroxy, alkoxy (e.g. $C_1$ to $C_4$ alkoxy), keto, acyl, cyano, mercapto, amino, amido, nitro, nitroso, sulfoxy, nitryl and carboxy);

(iii) hetero substituents, that is, substituents which, while having a predominantly hydrocarbon character, in the context of this invention, contain other than carbon in a ring or chain otherwise composed of carbon atoms. Heteroatoms include sulphur, oxygen, nitrogen, and encompass substituents as pyridyl, furyl, thienyl and imidazolyl. In general, no more than two, preferably no more than one, non-hydrocarbon substituent will be present for every ten carbon atoms in the hydrocarbyl group; typically, there will be no non-hydrocarbon substituents in the hydrocarbyl group.

In this specification, unless otherwise stated references to optionally substituted alkyl groups may include aryl-substituted alkyl groups and references to optionally-substituted aryl groups may include alkyl-substituted or alkenyl-substituted aryl groups.

Preferred hydrocarbyl-based substituents are poly-(isobutene)s. Such compounds are known in the art. Thus in especially preferred embodiments the hydrocarbyl substituted acylating agent is a polyisobutenyl substituted succinic acid or succinic anhydride.

Polyisobutenyl substituted succinic anhydrides are especially preferred.

The preparation of polyisobutenyl substituted succinic anhydrides (PIBSA) is documented in the art. Suitable processes include thermally reacting polyisobutenes with maleic anhydride (see for example US-A-3,361,673 and US-A-3,018,250), or reacting a halogenated, in particular a chlorinated, polyisobutene (PIB) with maleic anhydride (see for example US-A-3,172,892). Alternatively, the polyisobutenyl succinic anhydride can be prepared by mixing the polyolefin with maleic anhydride and passing chlorine through the mixture (see for example GB-A-949,981).

Conventional polyisobutenes and so-called "highly-reactive" polyisobutenes are suitable for use in the invention. Highly reactive polyisobutenes in this context are defined as polyisobutenes wherein at least 50%, preferably 70% or more, of the terminal olefinic double bonds are of the vinylidene type as described in EP0565285. Particularly preferred polyisobutenes are those having more than 80 mol% and up to 100% of terminal vinylidene groups such as those described in EP1344785.

The person skilled in the art will appreciate that in the preparation of PIBSAs from the reaction of PIB with maleic acid (MA), a mixture of products will result. Typically reaction mixtures include some unreacted PIB, some PIBSA from the reaction of PIB with one MA (monomaleated PIBSA) and some PIBSA from the reaction of PIB with two MA (bismaleated PIBSA). The fraction of bismaleated product as a proportion of the total PIBSA product may be referred to as the bismaleation level (BML). Suitable PIBSAs for use in preparing additive (i) may have a BML of up to 90%, suitably up to 70%, for example 1 to 50% or 2 to 30%.

Other preferred hydrocarbyl groups include those having an internal olefin for example as described in the applicant's published application WO2007/015080.

An internal olefin as used herein means any olefin containing predominantly a non-alpha double bond, that is a beta or higher olefin. Preferably such materials are substantially completely beta or higher olefins, for example containing less than 10% by weight alpha olefin, more preferably less than 5% by weight or less than 2% by weight. Typical internal olefins include Neodene 1518 IO available from Shell.

Internal olefins are sometimes known as isomerised olefins and can be prepared from alpha olefins by a process of isomerisation known in the art, or are available from other sources. The fact that they are also known as internal olefins reflects that they do not necessarily have to be prepared by isomerisation.

Preferably the additive of the present invention is the reaction product of an alcohol or amine including a tertiary amino group and an optionally substituted succinic acid or anhydride thereof of formula (A1) or (A2):

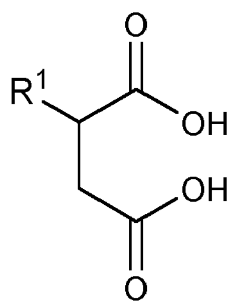

(A1)

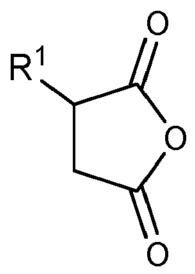

(A2)

wherein $R^1$ is an optionally substituted hydrocarbyl group. Preferably $R^1$ is an optionally substituted alkyl or alkenyl group.

$R^1$ may be substituted with one or more groups selected from halo (e.g. chloro, fluoro or bromo), nitro, hydroxy, mercapto, sulfoxy, amino, nitryl, acyl, carboxy, alkyl (e.g. $C_1$ to $C_4$ alkyl), alkoxyl (e.g. $C_1$ to $C_4$ alkoxy), amido, keto, sulfoxy and cyano.

Preferably $R^1$ is an unsubstituted alkyl or alkenyl group. The substituted succinic acid or anhydrides may suitably be prepared by reacting maleic anhydride with an alkene.

In some preferred embodiments $R^1$ has a molecular weight of from 100 to 5000, preferably from 300 to 4000, suitably from 450 to 2500, for example from 450 to 2000 or from 450 to 1500.

In some embodiments the substituted succinic acid or anhydride thereof may comprise a mixture of compounds

including groups $R^1$ of different lengths. In such embodiments any reference to the molecular weight of the group $R^1$ relates to the number average molecular weight of all of that group for all compounds in the composition.

In preferred embodiments $R^1$ is a polyisobutenyl group, preferably having a number average molecular weight of from 100 to 5000, preferably from 200 to 2400, suitably from 450 to 1500.

In some embodiments $R^1$ is an optionally substituted $C_1$ to $C_{500}$ alkyl or alkenyl group, for example a $C_8$ to $C_{40}$ alkyl or alkenyl group, suitably $C_{16}$ to $C_{36}$ alkyl or alkenyl group.

In some embodiments the additive of the present invention is the reaction product of a succinic acid or anhydride having a $C_{10}$ to $C_{30}$, preferably a $C_{20}$ to $C_{24}$ alkyl or alkenyl group and an amine or alcohol which further includes a tertiary amino group.

In especially preferred embodiments the additive of the present invention is prepared from the reaction product of a hydrocarbyl substituted succinic acid or an anhydride thereof substituted with a polyisobutenyl group having a number average molecules of 450 to 1500 and an alcohol or amine which further includes a tertiary amino group.

Preferred nitrogen-containing species having at least one tertiary amino group of types (i) are formed by the reaction of a hydrocarbyl-substituted acylating agent and an amine of formula (B1) or (B2):

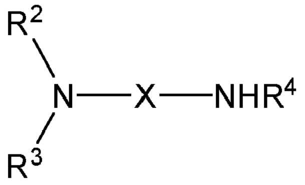

(B1)

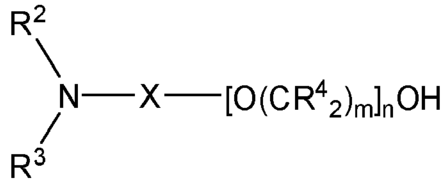

(B2)

wherein R is an optionally substituted alkyl, alkenyl, aryl or alkylaryl group; $R^1$ is a $C_1$ to $C_{36}$ alkyl, aryl or alkylaryl group; $R^2$ and $R^3$ are the same or different alkyl groups having from 1 to 36 carbon atoms; X is an alkylene group having from 1 to 20 carbon atoms; n is from 0 to 20; m is from 1 to 5; and $R^4$ is hydrogen or a $C_1$ to $C_{36}$ alkyl group.

To form the quaternary ammonium salt additives of the present invention a quaternising agent is reacted with a compound formed by the reaction of a hydrocarbyl substituted acylating agent and an amine of formula (B1) or (B2).

When a compound of formula (B1) is used, $R^4$ is preferably hydrogen or a $C_1$ to $C_{16}$ alkyl group, preferably a $C_1$ to $C_{10}$ alkyl group, more preferably a $C_1$ to $C_6$ alkyl group. When $R^4$ is alkyl it may be straight chained or branched. It may be substituted for example with a hydroxy or alkoxy substituent. Preferably $R^4$ is not a substituted alkyl group. More preferably $R^4$ is selected from hydrogen, methyl, ethyl, propyl, butyl and isomers thereof. Most preferably $R^4$ is hydrogen.

When a compound of formula (B2) is used, each $R^4$ is preferably hydrogen or a $C_1$ to $C_6$ alkyl group. More preferably each $R^4$ is selected from hydrogen, methyl, ethyl, propyl, butyl and isomers thereof. Most preferably each $R^4$ is hydrogen or methyl.

When a compound of formula (B2) is used, m is preferably 2 or 3, most preferably 2; n is preferably from 0 to 15, preferably 0 to 10, more preferably from 0 to 5. Most preferably n is 0 and the compound of formula (B2) is an alcohol.

In some preferred embodiments the hydrocarbyl substituted acylating agent is reacted with a diamine compound of formula (B1).

$R^2$ and $R^3$ are the same or different alkyl, alkenyl or aryl groups having from 1 to 22 carbon atoms. In some embodiments $R^2$ and $R^3$ may be joined together to form a ring structure, for example a piperidine or imidazole moiety. $R^2$ and $R^3$ may be branched alkyl or alkenyl groups. Each may be substituted, for example with a hydroxy or alkoxy substituent.

$R^2$ and $R^3$ may each independently be a $C_1$ to $C_{16}$ alkyl group, preferably a $C_1$ to $C_{10}$ alkyl group. $R^2$ and $R^3$ may independently be methyl, ethyl, propyl, butyl, pentyl, hexyl, heptyl, octyl, or an isomer of any of these. Preferably $R^2$ and $R^3$ is each independently $C_1$ to $C_4$ alkyl. Preferably $R^2$ is methyl. Preferably $R^3$ is methyl.

X is a bond or alkylene group having from 1 to 20 carbon atoms. In preferred embodiments when X is an alkylene group this group may be straight chained or branched. The alkylene group may include a cyclic structure therein. It may be optionally substituted, for example with a hydroxy or alkoxy substituent.

X is preferably an alkylene group having 1 to 16 carbon atoms, preferably 1 to 12 carbon atoms, more preferably 1 to 8 carbon atoms, for example 2 to 6 carbon atoms or 2 to 5 carbon atoms. Most preferably X is an ethylene, propylene or butylene group, especially a propylene group.

Examples of compounds of formula (B1) suitable for use herein include 1-aminopiperidine, 1-(2-aminoethyl)piperidine, 1- (3-aminopropyl)-2-pipecoline, 1-methyl-(4-methylamino)piperidine, 4-(1-pyrrolidinyl)piperidine, 1-(2-aminoethyl)pyrrolidine, 2-(2-aminoethyl)-1- methylpyrrolidine, N,N-diethylethylenediamine, N,N-dimethylethylenediamine, N,N-dibutylethylenediamine, N,N-diethyl-l,3-diaminopropane, N,N-dimethyl-1,3-diaminopropane, N,N,N'-trimethylethylenediamine, N,N-dimethyl-N'-ethylethylenediamine, N,N-diethyl-N'-methylethylenediamine, N,N,N'- triethylethylenediamine, 3-dimethylaminopropylamine, 3-diethylaminopropylamine, 3-dibutylaminopropylamine, N,N,N'-trimethyl- 1,3-propanediamine, N,N,2,2-tetramethyl-l,3-propanediamine, 2-amino-5-diethylaminopentane, N,N,N',N'-tetraethyldiethylenetriamine, 3,3'-diamino-N-methyldipropylamine, 3,3'-iminobis(N,N-dimethylpropylamine), 1-(3-aminopropyl)imidazole and 4-(3-aminopropyl)morpholine, 1-(2-aminoethyl)piperidine, 3,3-diamino-N-methyldipropylamine, 3,3-aminobis(N,N- dimethy Ipropy lamine), N'-(3-(dimethylamino)propyl)-N,N-dimethyl 1,3-propanediamine or combinations thereof.

In some preferred embodiments the compound of formula (B1) is selected from from N,N-dimethyl-1,3-diaminopropane, N,N-diethyl-1,3- diaminopropane, N,N-dimethylethylenediamine, N,N-diethylethylenediamine, N,N-dibutylethylenediamine, or combinations thereof.

An especially preferred compound of formula (B1) is dimethylaminopropylamine.

Examples of compounds of formula (B2) suitable for use herein include alkanolamines including but not limited to triethanolamine, N,N-dimethylaminopropanol, N,N-diethylaminopropanol, N,N-diethylaminobutanol, triisopropanolamine, 1-[2-hydroxyethyl]piperidine, 2-[2-(dimethylamine)ethoxy]-ethanol, N-ethyldiethanolamine, N-methyldiethanolamine, N-butyldiethanolamine, N,N-diethylaminoethanol, N,N-dimethyl aminoethanol, 2-dimethylamino-2-methyl-1-propanol; trimethanolamine, N,N,N-tris(hydroxymethyl)amine, N,N,N-tris(aminoethyl)amine, N,N-bis(3-dimethylaminopropyl)-N-isopropanolamine and N-(3-dimethylaminopropyl)-N,N-diisopropanolamine.

In some preferred embodiments the compound of formula (B2) is selected from N, N-dimethylaminopropanol, triisopropanolamine, 1-[2-hydroxyethyl]piperidine, 2-[2-(dimethylamine)ethoxy]-ethanol, N-ethyldiethanolamine, N-methyldiethanolamine, N-butyldiethanolamine, N,N-diethylaminoethanol, N,N-dimethylaminoethanol, 2-dimethylamino-2-methyl-1-propanol, or combinations thereof.

An especially preferred compound of formula (B2) is dimethylaminopropanol.

Some preferred acylating agents for use in the preparation of the quaternary ammonium salt additives of the present invention are polyisobutene-substituted succinic acids or succinic anhydrides. When a compound of formula (B2) is reacted with a succinic acylating agent the resulting product is a succinic ester. When a succinic acylating agent is reacted with a compound of formula (B1) in which $R^4$ is hydrogen the resulting product may be a succinimide or a succinamide. When a succinic acylating agent is reacted with a compound of formula (B1) in which $R^4$ is not hydrogen the resulting product is an amide.

Thus in some embodiments component (i) may be the reaction product of a succinic acid derivative and an amine or alcohol which is an ester or an amide and which also includes a further unreacted carboxylic acid group. This further carboxylic acid functional group can react with another amine or alcohol when an excess is used to form a diester or the diamide.

For the avoidance of doubt, succinic esters include the monoester compounds having the general formula (C1) and the diester compounds having the general formula (C2); succinimides have the general formula (C3); and succinamides include the monoamide compounds having the general formula (C4) and the diamide compounds having have the general formula (C5):

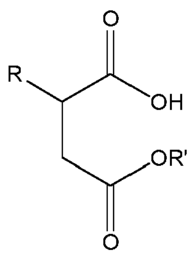
C1

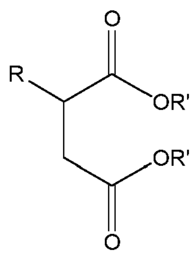
C2

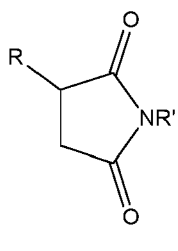
C3

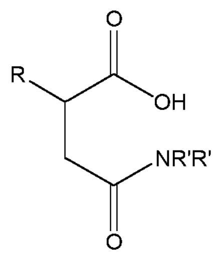
C4

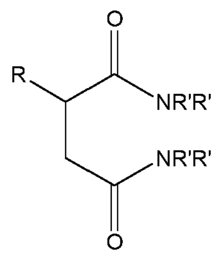
C5

It will be appreciated isomers of C1 and C4 may be formed in which the other carboxylic acid group is esterified/amidated.

The groups R' shown in figures (C1) to (C5) include a tertiary amino group. This group may be quaternised by reaction with a quaternising agent. For compounds of formula (C2) or (C5) which include two tertiary amino groups, each of these may be reacted with a quaternising agent to provide a diquaternary ammonium compound including two cationic moieties. Compounds of this type to provide a diquarternary ammonium compound including two cationic moieties. Compounds of this type are described (for use as diesel detergents) in US 9,365,787.

In some embodiments mixtures of compounds having formula (C1) and (C2) or mixtures containing compounds

(C3) and/or (C4) and/or (C5) may be used.

In preferred embodiments a succinic acid derivative is reacted with an amine (also including a tertiary amine group) under conditions to form a succinimide.

In some embodiments the acid/anhydride and the alcohol/amine are reacted in a molar ratio of from 10:1 to 1:10, preferably from 5:1 to 1:5, more preferably from 2:1 to 1:2, for example from 1.5:1 to 1:1.5.

Preferably the acid/anhydride and the alcohol/amine are reacted in an approximately 1:1 molar ratio, for example from 1.2:1 to1:1.2.

Suitably the quaternary ammonium salt additive of the present invention is prepared from the reaction product of an optionally substituted succinic acid or anhydride thereof, preferably a hydrocarbyl substituted succinic acid or anhydride thereof, and an alcohol or amine selected from dimethylaminopropanol, dimethylaminopropylamine, N,N-diethyl-1,3- diaminopropane, N,N-dimethylethylenediamine, N,N-diethylethylenediamine, N,N-dibutylethylenediamine, or combinations thereof.

In some especially preferred embodiments the quaternary ammonium salt additives of the present invention are salts of tertiary amines (i) prepared from an amine which includes a tertiary amino group (dimethylamino propylamine) and a polyisobutylene-substituted succinic anhydride. The average molecular weight of the polyisobutylene substituent is preferably from 450 to 1300, more preferably from 900 to 1100.

The quaternary ammonium salt additives of the present invention derived from tertiary amines (i) may be prepared by any suitable method. Such methods will be known to the person skilled in the art and are exemplified herein. Typically the quaternary ammonium salt additives will be prepared by heating the quaternising agent and a compound prepared by the reaction of a hydrocarbyl substituted acylating agent with an amine of formula (B1) or (B2) in an approximate 1:1 molar ratio, optionally in the presence of a solvent. The resulting crude reaction mixture may be added directly to a gasoline fuel, optionally following removal of solvent. Any by-products or residual starting materials still present in the mixture have not been found to cause any detriment to the performance of the additive. Thus the present invention may provide a gasoline fuel composition comprising the reaction product of a quaternising agent and the reaction product of a hydrocarbyl substituted acylating agent and an amine formula (B1) or (B2).

In some embodiments the nitrogen-containing species having at least one tertiary amine group may be (ii) a Mannich reaction product including a tertiary amine. The preparation of quaternary ammonium salts formed from nitrogen-containing species including component (ii) is described in US 2008/0052985.

The Mannich reaction product having a tertiary amine group is prepared from the reaction of a hydrocarbyl-substituted phenol, an aldehyde and an amine.

The hydrocarbyl substituent of the hydrocarbyl substituted phenol can have 6 to 400 carbon atoms, suitably 30 to 180 carbon atoms, for example 10 or 40 to 110 carbon atoms. This hydrocarbyl substituent can be derived from an olefin or a polyolefin. Useful olefins include alpha-olefins, such as 1-decene, which are commercially available.

The polyolefins which can form the hydrocarbyl substituent can be prepared by polymerizing olefin monomers by well known polymerization methods and are also commercially available.

Some preferred polyolefins include polyisobutylenes having a number average molecular weight of 400 to 3000, in another instance of 400 to 2500, and in a further instance of 400 or 450 to 1500.

The hydrocarbyl-substituted phenol can be prepared by alkylating a phenol with an olefin or polyolefin described above, such as, a polyisobutylene or polypropylene, using well-known alkylation methods.

In some embodiments the phenol may include a lower molecular weight alkyl substituent for example a phenol which carries one or more alkyl chains having a total of less 28 carbon atoms, preferably less than 24 carbon atoms, more preferably less than 20 carbon atoms, preferably less than 18 carbon atoms, preferably less than 16 carbon atoms and most preferably less than 14 carbon atoms.

A monoalkyl phenol may be preferred, suitably having from 4 to 20 carbons atoms, preferably 6 to 18, more preferably 8 to 16, especially 10 to 14 carbon atoms, for example a phenol having a C12 alkyl substituent.

The aldehyde used to form the Mannich detergent can have 1 to 10 carbon atoms, and is generally formaldehyde or a reactive equivalent thereof such as formalin or paraformaldehyde.

The amine used to form the Mannich detergent can be a monoamine or a polyamine.

Examples of monoamines include but are not limited to ethylamine, dimethylamine, diethylamine, n-butylamine, dibutylamine, allylamine, isobutylamine, cocoamine, stearylamine, laurylamine, methyllaurylamine, oleylamine, N-methyl-octylamine, dodecylamine, diethanolamine, morpholine, and octadecylamine.

Suitable polyamines may be selected from any compound including two or more amine groups. Suitable polyamines include polyalkylene polyamines, for example in which the alkylene component has 1 to 6, preferably 1 to 4, most preferably 2 to 3 carbon atoms. Preferred polyamines are polyethylene polyamines.

The polyamine has 2 to 15 nitrogen atoms, preferably 2 to 10 nitrogen atoms, more preferably 2 to 8 nitrogen atoms.

In especially preferred embodiments the amine used to form the Mannich detergent comprises a diamine. Suitably it includes a primary or secondary amine which takes part in the Mannich reaction and in addition a tertiary amine.

In preferred embodiments component (ii) comprises the product directly obtained from a Mannich reaction and comprising a tertiary amine. For example the amine may comprise a single primary or secondary amine which when reacted in the Mannich reaction forms a tertiary amine which is capable of being quaternised. Alternatively the amine may comprise a primary or secondary amine capable of taking part in the Mannich reaction and also a tertiary amine capable of being quaternised. However component (ii) may comprise a compound which has been obtained from a Mannich reaction and subsequently reacted to form a tertiary amine, for example a Mannich reaction may yield a secondary amine which is then alkylated to a tertiary amine.

In some embodiments the nitrogen-containing species comprising at least one tertiary amine group is (iii) a polyalkylene substituted amine having at least one tertiary amine group.

The preparation of quaternary ammonium salt additives in which the nitrogen-containing species includes component (iii) is described for example in US 2008/0113890.

The polyalkene-substituted amines having at least one tertiary amino group of the present invention may be derived from an olefin polymer and an amine, for example ammonia, momoamines, polyamines or mixtures thereof. They may be prepared by a variety of methods such as those described and referred to in US 2008/0113890.

Suitable preparation methods include, but are not limited to: reacting a halogenated olefin polymer with an amine; reacting a hydroformylated olefin with a polyamine and hydrogenating the reaction product; converting a polyalkene into the corresponding epoxide and converting the epoxide into the polyalkene substituted amine by reductive animation; hydrogenation of a β-aminonitrile; and hydroformylating an polybutene or polyisobutylene in the presence of a catalyst, CO and $H_2$ at elevated pressure and temperatures.

The olefin monomers from which the olefin polymers are derived include polymerizable olefin monomers characterised by the presence of one or more ethylenically unsaturated groups for example ethylene, propylene, 1-butene, isobutene, 1-octene, 1,3-butadiene and isoprene.

The olefin monomers are usually polymerizable terminal olefins. However, polymerizable internal olefin monomers can also be used to form the polyalkenes.

Examples of terminal and internal olefin monomers, which can be used to prepare the polyalkenes according to conventional, well-known polymerization techniques include: ethylene; propylene; butenes, including 1-butene, 2-butene and isobutylene; 1-pentene; 1-hexene; 1-heptene; 1-octene; 1-nonene; 1-decene; 2-pentene; propylene-tetramer; diisobutylene; isobutylene trimer; 1,2-butadiene; 1,3-butadiene; 1,2-pentadiene; 1,3-pentadiene; 1,4-pentadiene; isoprene; 1,5-hexadiene; 2-methyl-5-propyl-1-hexene; 3-pentene; 4-octene; and 3,3-dimethyl-1-pentene.

Suitably the polyalkene substituent of the polyalkene-substituted amine is derived from a polyisobutylene.

The amines that can be used to make the polyalkene-substituted amine include ammonia, monoamines, polyamines, or mixtures thereof, including mixtures of different monoamines, mixtures of different polyamines, and mixtures of monoamines and polyamines (which include diamines). The amines include aliphatic, aromatic, heterocyclic and carbocylic amines.

The monomers and polyamines suitably include at least one primary or secondary amine group.

Suitable monoamines are generally substituted with a hydrocarbyl group having 1 to about 50 carbon atoms, preferably 1 to 30 carbon atoms. Saturated aliphatic hydrocarbon radicals are particularly preferred.

Examples of suitable monoamines include methylamine, ethylamine, diethylamine, 2-ethylhexylamine, di-(2-ethylhexyl)amine, n-butylamine, di-n-butylamine, allylamine, isobutylamine, cocoamine, stearylamine, laurylamine, methyllaurylamine and oleylamine.

Aromatic monoamines include those monoamines wherein a carbon atom of the aromatic ring structure is attached directly to the amine nitrogen. Examples of aromatic monoamines include aniline, di(para-methylphenyl)amine, naphthylamine, and N-(n-butyl)aniline.

Examples of aliphatic substituted, cycloaliphatic-substituted, and heterocyclic-substituted aromatic monoamines include: para-dodecylaniline, cyclohexyl-substituted naphthylamine, and thienyl-substituted aniline respectively.

Hydroxy amines are also included in the class of useful monoamines. Examples of hydroxyl-substituted monoamines include ethanolamine, di-3-propanolamine, 4-hydroxybutylamine; diethanolamine, and N-methyl-2-hydroxypropylamine.

The amine of the polyalkene-substituted amine can be a polyamine. The polyamine may be aliphatic, cycloaliphatic, heterocyclic or aromatic.

Examples of suitable polyamines include alkylene polyamines, hydroxy containing polyamines, arylpolyamines, and heterocyclic polyamines.

Ethylene polyamines, are especially useful for reasons of cost and effectiveness. Suitable ethylene polyamines are described in relation to the first aspect.

Suitable hydroxy containing polyamines include hydroxyalkyl alkylene polyamines having one o more hydroxyalkyl substituents on the nitrogen atoms and can be prepared by reacting alkylenepolyamines with one or more alkylene oxides. Examples of suitable hydroxyalkyl-substituted polyamines include: N-(2-hydroxyethyl)ethylene diamine, N,N-bis(2-hydroxyethyl)ethylene diamine, 1-(2-hydroxyethyl) piperazine, monohydroxypropl-substituted diethylene triamine,

dihydroxypropyl-substituted tetraethylene pentamine, propyl and N-(3-hydroxybutyl)tetramethylene diamine.

Suitable arylpolyamines are analogous to the aromatic monoamines mentioned above except for the presence within their structure of another amino nitrogen. Some examples of arylpolyamines include N,N'-di-n-butyl-para-phenylene diamine and bis-(para-aminophenyl)methane.

Suitable heterocyclic mono- and polyamines will be known to the person skilled in the art. Specific examples of such heterocyclic amines include N-aminopropylmorpholine, N-aminoethylpiperazine, and N,N'-diaminoethylpiperazine. Hydroxy heterocyclic polyamines may also be used for example N-(2-hydroxyethyl)cyclohexylamine, 3-hydroxycyclopentylamine, parahydroxy-aniline and N-hydroxyethlpiperazine.

Examples of polyalkene-substituted amines can include: poly(propylene)amine, poly(butene)amine, N,N-dimethylpolyisobutyleneamine; N-polybutenemorpholine, N-poly(butene)ethylenediamine, N-poly(propylene) trimethylenediamine, N-poly(butene)diethylenetriamine, N',N'-poly(butene)tetraethylenepentamine, and N,N-dimethyl-N'poly(propylene)-1,3 propylenediamine.

The number average molecular weight of the polyalkene-substituted amines can range from 500 to 5000, or from 500 to 3000, for example from 1000 to 1500.

In some embodiments the nitrogen-containing species having at least one tertiary amine group is (iv) a tertiary amine of formula $R^1R^2R^3N$, wherein each of $R^1$, $R^2$ and $R^3$ is independently an optionally substituted alkyl, alkenyl or aryl group.

In some embodiments of the present invention the tertiary amine of formula $R^1R^2R^3N$ may be a small compound of low complexity and low molecular weight. In some embodiments the tertiary amine may be a complex molecule and/or a molecule of high molecular weight which includes a tertiary amine group.

The tertiary amine compounds of formula $R^1R^2R^3N$ preferably do not include any primary or secondary amine groups. In some embodiments they may be derived from compounds including these groups but preferably these have been subsequently reacted to form additional tertiary amine species. The tertiary amine compound formula $R^1R^2R^3N$ may contain more than one tertiary amine group. However tertiary amine compounds including primary or secondary amine groups are within the scope of the invention provided these groups do not prevent quaternisation of the tertiary amine species.

Tertiary amines (iv) for use herein are preferably compounds of formula $R^1R^2R^3N$, wherein each of $R^1$, $R^2$ and $R^3$ is independently an optionally substituted alkyl, alkenyl or aryl group.

$R^1$, $R^2$ and $R^3$ may be the same or different. In some preferred embodiments $R^1$ and $R^2$ are the same and $R^3$ is different.

Preferably each of $R^1$ and $R^2$ is independently an optionally substituted alkyl, alkenyl or aryl group having from 1 to 50 carbon atoms, preferably from 1 to 40 carbon atoms, more preferably from 1 to 30 carbon atoms.

Each of $R^1$ and $R^2$ may be optionally substituted with one or more groups selected from halo (especially chloro and fluoro), hydroxy, alkoxy, keto, acyl, cyano, mercapto, alkylmercapto, dialkylamino, nitro, nitroso, and sulphoxy. The alkyl groups of these substituents may be further substituted.

Preferably each of $R^1$ and $R^2$ is independently an optionally substituted alkyl or alkenyl group. Preferably each of $R^1$ and $R^2$ is independently an optionally substituted alkyl group. In some embodiments each of $R^1$ and $R^2$ is independently an optionally substituted alkyl or alkenyl group having from 1 to 50 carbon atoms, preferably from 1 to 40 carbon atoms, more preferably from 1 to 30 carbon atoms, suitably from 1 to 20 carbon atoms, preferably from 1 to 12 carbon atoms, more preferably from 1 to 10 carbon atoms, suitably from 1 to 8 carbon atoms, for example from 1 to 6 carbon atoms.

In some preferred embodiments $R^1$ is an optionally substituted alkyl or alkenyl group, preferably having from 1 to 10, preferably from 1 to 4 carbon atoms. Preferably $R^1$ is an alkyl group. It may be a substituted alkyl group, for example a hydroxy substituted alkyl group. Preferably $R^1$ is an unsubstituted alkyl group. The alkyl chain may be straight-chained or branched. Preferably $R^1$ is selected from methyl, ethyl, propyl and butyl, including isomers thereof. Most preferably $R^1$ is methyl.

In some preferred embodiments $R^2$ is an optionally substituted alkyl or alkenyl group, preferably having from 1 to 10, preferably from 1 to 4 carbon atoms. Preferably $R^2$ is an alkyl group. It may be a substituted alkyl group, for example a hydroxy substituted alkyl group. Preferably $R^2$ is an unsubstituted alkyl group. The alkyl chain may be straight-chained or branched. Preferably $R^2$ is selected from methyl, ethyl, propyl and butyl, including isomers thereof. Most preferably $R^2$ is methyl.

In some embodiments $R^3$ is an optionally substituted alkyl or alkenyl group having from 1 to 50 carbon atoms, preferably from 1 to 40 carbon atoms, more preferably from 1 to 30 carbon atoms, suitably from 1 to 20 carbon atoms, preferably from 1 to 12 carbon atoms, more preferably from 1 to 10 carbon atoms, suitably from 1 to 8 carbon atoms, for example from 1 to 6 carbon atoms. Suitable substituents include halo (especially chloro and fluoro), hydroxy, alkoxy, keto, acyl, cyano, mercapto, alkylmercapto, amino, alkylamino, nitro, nitroso, sulphoxy, amido, alkyamido, imido and alkylimido. The alkyl groups of these substituents may be further substituted.

In some embodiments $R^3$ is an optionally substituted alkyl or alkenyl group, preferably having from 1 to 10,

preferably from 1 to 4 carbon atoms. Suitably $R^3$ is an optionally substituted alkyl group. Preferably $R^3$ is a substituted alkyl group. Preferred substituents include alkoxy and hydroxyl groups.

In some preferred embodiments $R^3$ is a hydroxyl-substituted alkyl group. The alkyl chain may be straight-chained or branched. Most preferably $R^3$ is a hydroxyethyl group.

Suitable tertiary amine compounds of formula $R^1R^2R^3N$ include simple alkylamino and hydroxyalkylamino compounds; trialkylamino compounds having a high molecular weight substituent; Mannich reaction products including a tertiary amine and substituted acylated amines or alcohols including a tertiary amine.

Simple alkylamino and hydroxyalkyl amino compounds are preferably compounds of formula $R^1R^2R^3N$, wherein each of $R^1$, $R^2$ and $R^3$ is an alkyl group or a hydroxyalkyl group. Each of $R^1$, $R^2$ and $R^3$ may be the same or different. Suitably each of $R^1$, $R^2$ and $R^3$ is independently selected from an alkyl or hydroxyalkyl group having 1 to 10, preferably 1 to 6 carbon atoms, for example 1 to 4 carbon atoms. Each of $R^1$, $R^2$ and $R^3$ may be independently selected from methyl, ethyl, propyl, butyl, pentyl, hexyl, hydroxymethyl, hydroxyethyl, hydroxypropyl, hydroxybutyl, hydroxypentyl and hydroxyhexyl. The amine of formula $R^1R^2R^3N$ may be a trialkylamine, a dialkylhydroxyalkylamine, a dihydroxyalkylalkylamine or a trihydroxyalkylamine. There are many different compounds of this type and these will be known to the person skilled in the art.

In some embodiments one or two of the groups $R^1$, $R^2$ and $R^3$ is a short chain alkyl group having 1 to 6, preferably 1 to 4 carbon atoms and the other one or two groups is a longer chain alkyl or group having 6 to 30, preferably 10 to 24 carbon atoms.

For example in some embodiments $R^1$ is $C_1$ to $C_4$ alkyl, preferably methyl and each $R^2$ and $R^3$ is an alkyl or alkenyl having 6 to 36, preferably 10 to 30, for example 12 to 24 carbon atoms.

Compounds of this type include, for example, dimethyloctadecylamine.

In some embodiments each of $R^1$ and $R^2$ is $C_1$ to $C_4$ alkyl preferably methyl and $R^3$ is an alkyl or alkenyl group having 6 to 36, preferably 10 to 30, for example 12 to 24 carbon atoms.

Compounds of this type include, for example, N-methyl N-N-ditallowamine.

Especially preferred tertiary amine compounds of formula $R^1R^2R^3N$ include N,N-dimethyl ethanolamine, dimethyloctadecylamine and N-methyl N-N-ditallowamine.

In some embodiments the nitrogen-containing species having at least one tertiary amine group is (v) a cyclic tertiary amine.

Suitable cyclic amines have the formula (D1):

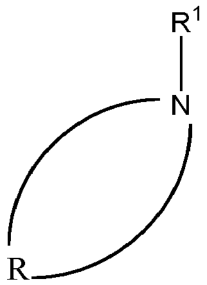

(D1)

wherein $R^1$ an optionally substituted alkyl, alkenyl or aryl group, and R together with N forms a heterocycle.

Preferably heterocycle has less than 12 carbon atoms. Preferably $R^1$ has less than 8 carbon atoms.

Preferably $R^1$ is an optionally substituted alkyl, alkenyl or aryl group having from 1 to 7 carbon atoms, preferably from 1 to 5 carbon atoms, more preferably from 1 to 4 carbon atoms.

$R^1$ may be optionally substituted with one or more groups selected from halo (especially chloro and fluoro), hydroxy, alkoxy, keto, acyl, cyano, mercapto, alkylmercapto, dialkylamino, nitro, nitroso, and sulphoxy. The alkyl groups of these substituents may be further substituted.

Preferably $R^1$ is an optionally substituted alkyl or alkenyl group. Preferably $R^1$ is an optionally substituted alkyl group. Preferably $R^1$ is an optionally substituted alkyl or alkenyl group having from 1 to 7 carbon atoms, preferably from 1 to 6 carbon atoms, more preferably from 1 to 5 carbon atoms, suitably from 1 to 4 carbon atoms, preferably from 1 to 3 carbon atoms, more preferably from 1 to 2 carbon atoms.

Preferably $R^1$ is an optionally substituted alkyl or alkenyl group, preferably having from 1 to 6, preferably from 1 to 4 carbon atoms. Preferably $R^1$ is an alkyl group. It may be a substituted alkyl group, for example a hydroxy substituted alkyl group. Preferably $R^1$ is an unsubstituted alkyl group or a hydroxy alkyl group. More Preferably $R^1$ is an unsubstituted alkyl group. The alkyl chain may be straight-chained or branched. Preferably $R^1$ is selected from methyl, ethyl, propyl

and butyl, including isomers thereof. Most preferably $R^1$ is methyl.

In some embodiments $R^1$, R and N together form an aromatic ring and the cyclic amine may have the structure (D2):

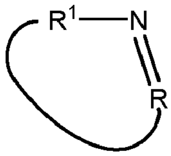

(D2)

In such embodiments the total number of carbon atoms in groups R and $R^1$ is preferably less than 19.

R together with N may form an aliphatic heterocyclic group or an aromatic heterocyclic group. Thus they form a heterocyclic ring. There may be one or more further heteroatoms in the ring. Suitably the ring may include one or more further atoms selected from N, O and S.

The heterocyclic group formed by R and N may be substituted or unsubstituted; i.e. there may be one or more substituents bonded to atoms that form the ring. Suitable substituents include halo (especially chloro and fluro); hydroxy, alkoxy, keto, acyl, cyano, mercapto, alkylmercapto, alkyl, alkenyl, aryl, dialkylamino, alkylamino, nitro, nitroso, and sulphoxy. The alkyl, alkenyl and aryl groups of these substituents may be further substituted.

The heterocyclic group may be substituted with a further cyclic group i.e. it may be part of a bicyclic heterocyclic group.

In some preferred embodiments the heterocyclic group formed by N and R is not substituted.

Preferably the group formed by R and N is a heterocyclic group having from 3 to 12 atoms in the ring. The atoms in the ring include carbon atoms and other atoms. Preferably the heterocyclic ring includes 3 to 10 atoms, preferably 4 to 8, more preferably 5 to 7 atoms.

In some preferred embodiments the heterocyclic group contains only carbon and nitrogen atoms within the ring.

The heterocyclic group formed by R and N may be aliphatic or aromatic.

In some preferred embodiments R and N together form an aliphatic or aromatic heterocycle having 5 to 7 atoms in the ring.

Suitable aliphatic heterocyclic groups include those based on pyrrolidine, piperidine, morpholine and piperazine.

Suitable aliphatic heterocyclic groups include unsaturated heterocycles that are not aromatic. i.e. they may contain one or more double bonds, for example those based on dihydropyrrole,.

Suitable aromatic heterocyclic groups including those based on pyrrole, pyridine, imidazole, pyrimidine, isoxzole, quinolone, oxazole, and pyrazole.

In especially preferred embodiments R and N together form an imidazole moiety or a pyrrolidine moiety.

Suitably R contains 3 to 11 carbon atoms (and optional heteroatoms with the ring), preferably 3 to 10 carbon atoms, preferably 3 to 9 carbon atoms, suitably 3 to 8 carbon atoms, preferably 3 to 7 carbon atoms, more preferably 3 to 6 carbon atoms, for example 3 to 5 or 3 to 4 carbon atoms.

Preferably R contains less than 8 carbon atoms.

The compound of formula (D1) or (D2) is a cyclic tertiary amine. By this we mean to refer to an amine group in which the nitrogen atom is part of a heterocyclic ring and is preferably further bonded to another group.

Suitably the compound of formula (D1) or (D2) is a cyclic tertiary amine having less than 18 carbon atoms. Preferably it has less than 16 carbon atoms, suitably less than 14 carbon atoms, preferably less than 12 carbon atoms, for example less than 10 carbon atoms, less than 8 carbon atoms or less than 6 carbon atoms.

Suitably the cyclic amine compound is a compound of formula (D1) and is an N-substituted heterocyclic amine. Preferably it is an N-alkyl heterocyclic amine having 5 to 7 atoms in the heterocyclic ring.

In some preferred embodiments the tertiary amine is an N-methyl cyclic amine wherein the heterocyclic ring moiety may include one or more further heteroatoms such as O, N or S and may be aliphatic or non-aromatic.

There are many different compounds of this type and these will be known to the person skilled in the art.

Some suitable cyclic amines for use herein are based on N-alkyl heterocycles, for example N-methyl heterocycles, selected from pyrrolidine, piperidine, morpholine, piperazine, pyrrole, imidazole and dihydropyrrole.

Other suitable amines include those based on the above in which the heterocyclic ring includes one or more further alkyl, alkenyl or aryl substituents, provided the total number of carbon atoms in the tertiary amine is less than 19. For example compounds which include one, two or three methyl groups bonded to carbon atoms within the heterocyclic ring are within the scope of the invention.

Some suitable cyclic amines for use herein include those based on heterocycles in which $R^1$, R and N together form an aromatic ring, for example those based on piperidine, pyrimidine, isoxazole and oxazole.

Other suitable amines include those based on the above in which the heterocyclic ring includes one or more further alkyl, alkenyl or aryl substituents, provided the total number of carbon atoms in the tertiary amine is less than 19.

Tertiary amine compounds including primary or secondary amine groups are within the scope of the invention provided these groups do not prevent quaternisation of the tertiary amine species.

The cyclic tertiary amine compounds) preferably do not include any free primary or secondary amine groups. The tertiary amine compound of formula $R{=}{=}NR^1$ may contain more than one tertiary amine group.

Some preferred cyclic amine compounds include 1-methyl pyrrolidine, 1-methylimidazole, 1,2-dimethyl-1H-imidazole, pyridine and mixtures and isomers thereof. 8-hydroxyquinoline could also be used.

Especially preferred tertiary amine compounds include methyl pyrollidine and methyl imidazole.

In some embodiments the nitrogen-containing species having at least one tertiary amine group is (vi) a polyetheramine compound.

Some preferred polyetheramine compounds are polyoxyalkylene amines.

In some preferred embodiments the polyetheramine compound has the general formula (D3):

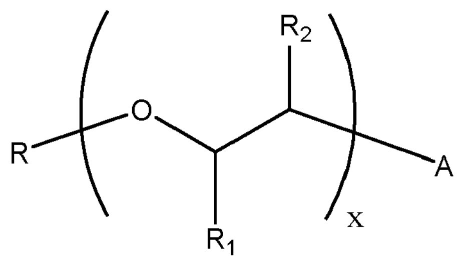

(D3)

wherein R is H or a hydrocarbyl group having from 1 to 30 carbon atoms; $R_1$ and $R_2$ are each independently hydrogen or lower alkyl having from about 1 to about 6 carbon atoms and each $R_1$ and $R_2$ is independently selected in each --O-$CHR_1$ -$CHR_2$ -- unit; and x is an integer of from 1 to 100, preferably 5 to 50; A is NR3R4, NR5NR3R4, OR5NR3R4, OCONR3R4 or a polyamine moiety having about 2 to about 12 nitrogen atoms, about 4 to about 40 carbon atoms and including at least one tertiary amine group; wherein each of $R_3$ and $R_4$ is independently an alkyl group having having about 1 to about 20 carbon atoms in each alkyl group, and $R_5$ is an alkylene group having 1 to 20 carbon atoms.

In a preferred embodiment R is H or a $C_1$-$C_{30}$ alkyl preferably a $C_4$-$C_{20}$ alkyl.

In another preferred embodiment R is an alkylphenyl group, wherein the alkyl group has from about 1 to about 24 carbon atoms.

Preferably, one of $R_1$ and $R_2$ is lower alkyl of 1 to 4 carbon atoms, and the other is hydrogen. More preferably, one of $R_1$ and $R_2$ is methyl or ethyl, and the other is hydrogen.

Preferably each of $R_3$ and $R_4$ is an alkyl group having from about 1 to about 20 carbon atoms in each alkyl group, preferably about 1 to about 6 carbon atoms, more preferably about 1 to about 4 carbon atoms. Suitably $R_5$ is an alkyl group having from about 1 to about 20 carbon atoms in each alkyl group, preferably about 1 to about 6 carbon atoms, more preferably about 1 to about 4 carbon atoms.

In some embodiments A is a polyamine moiety comprising a tertiary amine group and having from about 2 to about 12 nitrogen atoms and from about 4 to about 40 carbon atoms.

In some embodiments, the compound of formula (D3) may be derived by alkoxylation of an N,N dialkyl hydroxyalkylamine such as N,N dimethyl aminoethanol or N,N dimethylamino propanol. In other embodiments the compound of formula D4 may be derived by alkoxylation of a $C_1$-$C_{30}$ alcohol preferably a $C_4$-$C_{20}$ alcohol followed by amination with ammonia further followed by alkylation of the amine. Such processes are described in US2013225463.

Other preferred features of the polyetheramine compound are also described in US2013225463.

In especially preferred embodiments, the quaternary ammonium salt of the present invention is prepared by the reaction of a quaternising agent and (i) the reaction product of a hydrocarbyl-substituted acylating agent and a compound comprising at least one tertiary amine group and a primary amine, secondary amine or alcohol group.

The quaternary ammonium salt additives used in the present invention are prepared by the reaction of a nitrogen-containing species having at least one tertiary amine group and a quaternising agent.

Any compound capable of reacting with the tertiary amine group to form a permanent ammonium cation may be used as the quaternising agent.

In some embodiments following reaction with a quaternising agent an ion exchange reaction may be carried out to provide a quaternary ammonium compound having a different anion.

The quaternary ammonium salts of the present invention may be prepared by reaction of a tertiary amine with a quaternising agent selected from an ester of a carboxylic acid, epoxides optionally in combination with an acid, dialkyl

sulfates, benzyl halides, hydrocarbyl substituted carbonates, alkyl halides, alkyl sulfonates, sultones, hydrocarbyl substituted phosphates, hydrocarbyl substituted borates, alkyl nitrites, alkyl nitrates, hydroxides, N-oxides or mixtures thereof, followed by an anion exchange reaction.

In fuel applications it is often desirable to reduce the levels of halogen-, sulfur-, and phosphorus-containing species. Thus if a quaternizing agent containing such an element is used it may be advantageous to carry out a subsequent reaction to exchange the counterion. For example a quarternary ammonium salt formed by reaction with an alkyl halide could be subsequently reacted with sodium hydroxide and the sodium halide salt removed by filtration.

The quaternizing agent can include halides, such as chloride, iodide or bromide; hydroxides; sulphonates; bisulphites, alkyl sulphates, such as dimethyl sulphate; sulphones; phosphates; C1-12 alkylphosphates; di C1-12 alkylphosphates; borates; C1-12 alkylborates; nitrites; nitrates; carbonates; bicarbonates; alkanoates; O,O-di C1-12 alkyldithiophosphates; or mixtures thereof.

In one embodiment the quaternizing agent may be derived from dialkyl sulphates such as dimethyl sulphate, N-oxides, sulphones such as propane and butane sulphone; alkyl, acyl or aralkyl halides such as methyl and ethyl chloride, bromide or iodide or benzyl chloride, and a hydrocarbyl (or alkyl) substituted carbonates. If the acyl halide is benzyl chloride, the aromatic ring is optionally further substituted with alkyl or alkenyl groups. The hydrocarbyl (or alkyl) groups of the hydrocarbyl substituted carbonates may contain 1 to 50, 1 to 20, 1 to 10 or 1 to 5 carbon atoms per group. In one embodiment the hydrocarbyl substituted carbonates contain two hydrocarbyl groups that may be the same or different. Examples of suitable hydrocarbyl substituted carbonates include dimethyl or diethyl carbonate.

Preferred quaternising agents for use herein are esters of a carboxylic acid or an epoxide, optionally in combination with an acid.

In one preferred embodiment the quaternising agent is an ester of formula $R^5COOR^0$.

In such embodiments R° is a $C_1$ to $C_7$ alkyl group and $R^5$ is preferably the residue of a carboxylic acid selected from a substituted aromatic carboxylic acid, an α-hydroxycarboxylic acid and a polycarboxylic acid.

Preferred ester quaternising agents are compounds of formula (E):

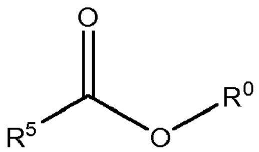

(E)

in which $R^5$ is an optionally substituted alkyl, alkenyl, aryl or alkylaryl group which may comprise a further carboxy derived functional group; and R° is a $C_1$ to $C_{22}$ alkyl, aryl or alkylaryl group.

The compound of formula (E) is suitably an ester of a carboxylic acid capable of reacting with a tertiary amine to form a quaternary ammonium salt.

Suitable quaternising agents include esters of carboxylic acids having a pKa of 3.5 or less.

The compound of formula (E) is preferably an ester of a carboxylic acid selected from a substituted aromatic carboxylic acid, an α-hydroxycarboxylic acid and a polycarboxylic acid.

In some preferred embodiments the compound of formula (E) is an ester of a substituted aromatic carboxylic acid and thus $R^5$ is a substituted aryl group.

In such embodiments $R^5$ is suitably a substituted aryl group having 6 to 10 carbon atoms, preferably a phenyl or naphthyl group, most preferably a phenyl group. $R^5$ is suitably substituted with one or more groups selected from carboalkoxy, nitro, cyano, hydroxy, SR' or NR'R". Each of R' and R" may be hydrogen or optionally substituted alkyl, alkenyl, aryl or carboalkoxy groups. Preferably each of R' and R" is hydrogen or an optionally substituted $C_1$ to $C_{22}$ alkyl group, preferably hydrogen or a $C_1$ to $C_{16}$ alkyl group, preferably hydrogen or a $C_1$ to $C_{10}$ alkyl group, more preferably hydrogen$C_1$ to $C_4$ alkyl group. Preferably R' is hydrogen and R" is hydrogen or a $C_1$ to $C_4$ alkyl group. Most preferably R' and R" are both hydrogen. Preferably $R^5$ is an aryl group substituted with one or more groups selected from hydroxyl, carboalkoxy, nitro, cyano and $NH_2$. R may be a poly-substituted aryl group, for example trihydroxyphenyl. Preferably $R^5$ is a mono-substituted aryl group. Preferably $R^5$ is an ortho substituted aryl group. Suitably R is substituted with a group selected from OH, $NH_2$, $NO_2$ or COOMe. Preferably $R^5$ is substituted with an OH or $NH_2$ group. Suitably $R^5$ is a hydroxy substituted aryl group. Most preferably $R^5$ is a 2-hydroxyphenyl group.

Preferably R° is an alkyl or alkylaryl group. R° may be a $C_1$ to $C_{16}$ alkyl group, preferably a $C_1$ to $C_{10}$ alkyl group, suitably a $C_1$ to $C_8$ alkyl group. R° may be $C_1$ to $C_{16}$ alkylaryl group, preferably a $C_1$ to $C_{10}$ alkylgroup, suitably a $C_1$ to $C_8$ alkylaryl group. R° may be methyl, ethyl, propyl, butyl, pentyl, benzyl or an isomer thereor. Preferably R° is benzyl or methyl. Most preferably R° is methyl.

Some especially preferred compounds of formula (E) are esters of salicylic acid such as benzyl salicylate,

methyl salicylate, ethyl salicylate, n and *i*-propyl salicylate, and butyl salicylate.

An especially preferred compound of formula (E) is methyl salicylate.

In some embodiments the compound of formula (E) is an ester of an α-hydroxycarboxylic acid. In such embodiments R5 is R'CR"OHCOOR$^0$ and the compound of formula (E) has the structure:

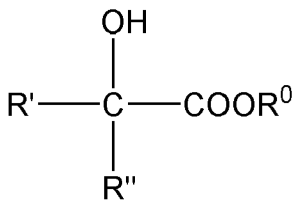

wherein R' and R" are the same or different and each is selected from hydrogen, alkyl, alkenyl, aralkyl or aryl. Compounds of this type suitable for use herein are described in EP 1254889.

Examples of compounds of formula (E) in which RCOO is the residue of an α-hydroxycarboxylic acid include methyl-, ethyl-, propyl-, butyl-, pentyl-, hexyl-, benzyl-, phenyl-, and allyl esters of 2-hydroxyisobutyric acid; methyl-, ethyl-, propyl-, butyl-, pentyl-, hexyl-, benzyl-, phenyl-, and allyl esters of 2-hydroxy-2-methylbutyric acid; methyl-, ethyl-, propyl-, butyl-, pentyl-, hexyl-, benzyl-, phenyl-, and allyl esters of 2-hydroxy-2-ethylbutyric acid; methyl-, ethyl-, propyl-, butyl-, pentyl-, hexyl-, benzyl-, phenyl-, and allyl esters of lactic acid; and methyl-, ethyl-, propyl-, butyl-, pentyl-, hexyl-, allyl-, benzyl-, and phenyl esters of glycolic acid. Of the above, a preferred compound is methyl 2-hydroxyisobutyrate.

In some embodiments the compound of formula (E) is an ester of a polycarboxylic acid. In this definition we mean to include dicarboxylic acids and carboxylic acids having more than 2 acidic moieties.

In such embodiments $R^5$ includes a carboxy derived functional group. This is preferably present in the form of an ester, that is the one or more further acid groups present in the group $R^5$ are in esterified form. Preferred esters are $C_1$ to $C_4$ alkyl esters.

Compound (E) may be selected from the diester of oxalic acid, the diester of phthalic acid, the diester of maleic acid, the diester of malonic acid or the diester of citric acid. One especially preferred compound of formula (E) is dimethyl oxalate.

In preferred embodiments the compound of formula (E) is an ester of a carboxylic acid having a $pK_a$ of less than 3.5. In such embodiments in which the compound includes more than one acid group, we mean to refer to the first dissociation constant.

Compound (E) may be selected from an ester of a carboxylic acid selected from one or more of oxalic acid, phthalic acid, salicylic acid, maleic acid, malonic acid, citric acid, nitrobenzoic acid, aminobenzoic acid and 2, 4, 6-trihydroxybenzoic acid.

Suitably the compound of formula (E) may be selected from dimethyl oxalate, methyl 2-nitrobenzoate, dimethylphthalate, dimethyltartrate and methyl salicylate

Preferred compounds of formula (E) include dimethyl oxalate, methyl 2-nitrobenzoate and methyl salicylate.

Most preferred ester quaternising agents are dimethyl oxalate and methyl salicylate.

In some preferred embodiments the quaternising agent is an epoxide, optionally in combination with an acid.

Any suitable epoxide compound may be used. Suitable epoxide compounds are those of formula:

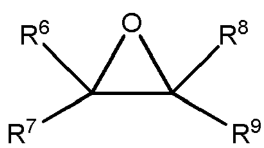

wherein each of $R^6$, $R^7$, $R^8$, $R^9$ is independently selected from hydrogen or an optionally substituted alkyl, alkenyl or aryl group, provided at least one of $R^6$, $R^7$, $R^8$ and $R^9$ is hydrogen.

Preferably at least two of $R^6$, $R^7$, $R^8$ and $R^9$ are hydrogen. Most preferably three of of $R^6$, $R^7$, $R^8$ and $R^9$ are hydrogen. of $R^6$, $R^7$, $R^8$ and $R^9$ may be all hydrogen.

In the structure above and the definitions which follow $R^6$ and $R^7$ are interchangeable and thus when these groups are different either enantiomer or diastereomer may be used as component (b).

In the structure above and the definitions which follow $R^8$ and $R^9$ are interchangeable and thus when these groups are different either enantiomer or diastereomer may be used as component (b).

Preferably $R^6$ is hydrogen or an optionally substituted alkyl, alkenyl or aryl group. $R^6$ may suitably be selected from hydrogen and phenyl. Most preferably $R^6$ is hydrogen.

Preferably $R^7$ is hydrogen or an optionally substituted alkyl, alkenyl or aryl group. Most preferably $R^7$ is hydrogen.

Preferably $R^8$ is hydrogen or an optionally substituted alkyl, alkenyl or aryl group. Most preferably $R^8$ is hydrogen.

Preferably $R^9$ is hydrogen or an optionally substituted alkyl, alkenyl or aryl group.

In some preferred embodiments $R^9$ is an optionally substituted aryl group. For example $R^9$ may be phenyl.

In some preferred embodiments $R^9$ is an optionally substituted alkyl or alkenyl group. $R^9$ may be an alkyl group, for example an unsubstituted alkyl group. $R^9$ may be an alkyl group having 1 to 50 carbon atoms, preferably from 1 to 30 carbon atoms, suitably 1 to 20 carbon atoms, preferably from 1 to 12 carbon atoms, for example from 1 to 8 or from 1 to 4 carbon atoms.

In some embodiments $R^9$ is hydrogen.

In some embodiments $R^9$ is the moiety $CH_2OR^{10}$ or $CH_2OCOR^{11}$ wherein each of $R^{10}$ and $R^{11}$ may be an optionally substituted alkyl, alkenyl or aryl group.

$R^{10}$ is preferably an optionally substituted alkyl or aryl group, preferably having from 1 to 30 carbon atoms, preferably from 1 to 20 carbon atoms, suitably from 1 to 12 carbon atoms. When $R^8$ is an alkyl group it may be straight-chained or branched. In some embodiments it is branched. $R^8$ may be an optionally substituted phenyl group.

In one embodiment $R^{10}$ is a 2-methyl phenyl group. In another embodiment $R^{10}$ is $CH_2C(CH_2CH_3)CH_2CH_2CH_2CH_3$.

$R^{11}$ may be an optionally substituted alkyl, alkenyl or aryl group.

$R^{11}$ is preferably an optionally substituted alkyl or aryl group, preferably having from 1 to 30 carbon atoms, preferably from 1 to 20 carbon atoms, suitably from 1 to 12 carbon atoms. When $R^{11}$ is an alkyl group it may be straight-chained or branched. In some preferred embodiments it is branched. $R^9$ may be an optionally substituted phenyl group.

In one embodiment $R^{11}$ is $C(CH_3)R_2$ wherein each R is an alkyl group. The R groups may be the same or different.

Preferably $R^{11}$ is an alkyl group having 1 to 5 carbon atoms. In some embodiments $R^9$ may include an oxygen atom in the carbon chain, i.e. $R^9$ may include an ether functional group. Suitable epoxide compounds for use herein as quaternising agents include ethylene oxide, propylene oxide, butylene oxide, pentylene oxide, hexylene oxide, heptylene oxide, dodecylene oxide, alkyl glycidyl ethers, for example 2-ethylhexyl glycidyl ether or isopropyl glycidyl ether, alkyl glycidyl esters styrene oxide, stilbene oxide and other C2 to C30 hydrocarbyl groups.

Some preferred epoxide compounds for use herein as quaternising agents include styrene oxide, ethylene oxide, propylene oxide, butylene oxide, stilbene oxide, dodecylene oxide 2-ethylhexyl glycidyl ether and isopropyl glycidyl ether. Styrene oxide, butylene oxide, 2-ethylhexyl glycidyl ether and propylene oxide are especially preferred.

Typically epoxide quaternising agents are used in combination with an acid. However in embodiments in which the nitrogen-containing species having at least one tertiary amine group includes (i) the reaction product of a substituted succinic acid which is an ester or an amide and which also includes a further unreacted carboxylic acid group, an additional acid may be omitted and the hydrocarbyl epoxide may be used alone as the quaternising agent. It is believed that formation of the quaternary ammonium salt is promoted by protonation by the carboxylic acid group also present in the molecule.

In such embodiments in which a further acid is not used, the quaternary ammonium salt is suitably prepared in a protic solvent. Suitable protic solvents include water, alcohols (including polyhydric alcohols) and mixtures thereof. Preferred protic solvents have a dielectric constant of greater than 9.

In preferred embodiments the epoxide quaternising agent is used in combination with an acid. Any suitable acid may be used. In preferred embodiments the acid is an organic acid, preferably a carboxylic acid.

For the avoidance of doubt the acid suitably activates the epoxide and forms the anionic counterion of the quaternary ammonium salt. In some embodiments a subsequent ion exchange reaction may be carried out but this is not preferred.

Any compound which includes a carboxylic acid functional group may be used. In some embodiments the acid may be a very small simple molecule. Examples of suitable small simple acids include formic acid, acetic acid, propionic acid and butyric acid.

In some embodiments the acid may be a simple fatty acid compound. However the acid may also be a more complex molecule including additional acid functional groups.

Suitable fatty acids include caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, arachidonic acid, eicosapentaenoic acid, erucic acid, undecylenic acid and docosahexenoic acid.

Suitable complex acids include optionally substituted phthalic acids and succinic acid derivatives.

Some preferred species of this type are hydrocarbyl substituted phthalic acid or succinic acid derivatives. Hydrocarbyl substituted succinic acid derivatives are especially preferred.

In one embodiment the hydrocarbyl group is preferably a polyisobutenyl group, preferably having a molecular weight of from 100 to 5000, preferably from 300 to 4000, suitably from 450 to 2500, for example from 450 to 2000 or from 450 to 1500.

In one embodiment the hydrocarbyl group is an alkyl or alkenyl group having 6 to 30 carbon atoms, preferably 10 to 26 carbon atoms, more preferably 12 to 24 carbon atoms, suitably 16 to 20 carbon atoms, for example 18 carbon atoms.

In one embodiment the hydrocarbyl group is an alkyl or alkenyl group having 6 to 50 carbon atoms, preferably 12 to 40 carbon atoms, more preferably 18 to 36 carbon atoms, suitably 24 to 36 carbon atoms, for example 30 carbon atoms.

In embodiments in which the acid has more than one acid functional group the further groups may be present as the free acid or the ester. Where there is more than one free acid group there may be an equivalent number of cations. For example in some embodiments the quaternary ammonium compound may comprise a dicarboxylate dianion and two quaternary ammonium ions. Compounds of this type are described in the applicant's copending application US3024913.

Preferred epoxide quaternising agents for use herein include styrene oxide, butylene oxide, propylene oxide or 2-ethylhexyl glycidyl ether in combination with a monocarboxylic acid, suitably acetic acid.

Preferred quaternary ammonium compounds of the present invention include the reaction product of:

(x) the reaction product of a hydrocarbyl-substituted acylating agent and a compound having at least one tertiary amine group and a primary amine, secondary amine or alcohol group; and
(y) a quaternising agent selected from: an ester of a carboxylic acid; and an epoxide, optionally in combination with an acid.

For the avoidance of doubt, in the above definition and in similar definitions herein, we mean that the epoxide is optionally used in combination with an acid, not the ester.

More preferred quaternary ammonium compounds of the present invention include the reaction product of:

(x) a polyisobutenyl substituted succinic acid or anhydride thereof and an amine or alcohol which further includes a tertiary amine group; and
(y) a quaternising agent selected from an ester of a carboxylic acid selected from one or more of oxalic acid, phthalic acid, salicylic acid, maleic acid, malonic acid, citric acid, nitrobenzoic acid, aminobenzoic acid and 2, 4, 6-trihydroxybenzoic acid; and an epoxide selected from one or more of ethylene oxide, propylene oxide, butylene oxide, pentylene oxide, hexylene oxide, heptylene oxide, isopropyl glycidyl ether, styrene oxide, stilbene oxide and other C2 to C30 hydrocarbyl groups, optionally in combination with an acid.

Some especially preferred quaternary ammonium compounds of the present invention include the reaction product of:

(x) a polyisobutenyl substituted succinic acid or anhydride thereof having a PIB molecular weight of 170 to 2800, preferably 450 to 1500 and an amine or alcohol selected from dimethylaminopropanol, dimethylaminopropylamine, N,N-diethyl-1,3- diaminopropane, N,N-dimethylethylenediamine, N,N-diethylethylenediamine, N,N-dibutylethylenediamine, or combinations thereof; and
(y) a quaternising agent selected from dimethyl oxalate, methyl 2-nitrobenzoate, dimethylphthalate, dimethyltartrate, methyl salicylate; and an epoxide selected from styrene oxide, 2-ethylhexyl glycidyl ether, ethylene oxide, propylene oxide, butylene oxide, 2-ethylhexyl glycidyl ether, stilbene oxide and isopropyl glycidyl ether, in combination with an acid.

Some especially preferred quaternary ammonium compounds of the present invention include the reaction product of:

(x) a polyisobutenyl substituted succinic acid or anhydride thereof having a PIB molecular weight of 170 to 2800, preferably 450 to 1500 and an amine or alcohol selected from dimethylaminopropanol and dimethylaminopropylamine; and
(y) a quaternising agent selected from dimethyl oxalate; methyl salicylate; and an epoxide selected from styrene oxide, propylene oxide and butylene oxide, in combination with an acid.

The present invention relates to uses of a gasoline fuel composition.

By the term "gasoline", it is meant a liquid fuel for use with spark ignition engines (typically or preferably containing primarily or only C4-C12 hydrocarbons) and satisfying international gasoline specifications, such as ASTM D-439 and EN228. The term includes blends of distillate hydrocarbon fuels with oxygenated components such as alcohols or ethers for example methanol, ethanol, butanol, methyl t-butyl ether (MTBE), ethyl t-butyl ether (ETBE), as well as the

distillate fuels themselves.

Suitably the quaternary ammonium salt additive is present in the gasoline composition in an amount of at least 0.1ppm, preferably at least 1 ppm, more preferably at least 5 ppm, suitably at least 10 ppm, preferably at least 20 ppm, for example at least 30ppm, at least 50 ppm or at least 70 ppm.

Suitably the quarternary ammonium salt additive is present in the gasoline composition in an amount of less than 300 ppm, 10000 ppm, preferably less than 1000 ppm, preferably less than 500 ppm, preferably less than300 ppm, for example less than 250 ppm or less than 200 ppm.

Suitably the quaternary ammonium salt additive is present in the gasoline in an amount of from 50 to 200 ppm, preferably 80 to 170 ppm.

In this specification any reference to ppm is to parts per million by weight.

The gasoline compositions used in the present invention may comprise a mixture of two or more quaternary ammonium salt additives. In such embodiments the above amounts refer to the total amounts of all such additives present in the composition.

The skilled person will appreciate that commercial sources of additive may be provided with a diluent or carrier. All amounts mentioned therein relate to the amount of active additive.

The use of mixtures may arise due to the availability of starting materials or a particular mixture may be deliberately selected to use in order to achieve a benefit. For example a particular mixture may lead to improvements in handling, a general improvement in performance or a synergistic improvement in performance.

In some preferred embodiments, the quaternary ammonium salt additives may be used without additional components. In other preferred embodiments, the quaternary ammonium salt is used with one or more additional components selected from:

a) carrier oils
b) acylated nitrogen compounds which are the reaction product of a carboxylic acid-derived acylating agent and an amine
c) hydrocarbyl-substituted amines wherein the hydrocarbyl substituent is substantially aliphatic and contains at least 8 carbon atoms
d) mannich base additives comprising nitrogen-containing condensates of a phenol, aldehyde and primary or secondary amine; and
e) polyether amines

Preferably the ratio of the quaternary ammonium salt additive to additional components (a) to (e) when present, is 1:100 to 100:1, preferably 1:50:50:1, preferably 1:15 to 20:1 preferably 1:15 to 10:1 preferably 1:10 to 10:1 preferably 1:5 to 5:1.

Preferably the ratio of the total of the quaternary ammonium salt additive and components b), c), d) and e) to carrier oil a) when present, is 1:100 to 100:1, preferably 1:50 : 50:1, preferably 1:15 to 20:1 preferably 1:15 to 10:1 preferably 1:10 to 10:1 preferably 1:5 to 5:1, preferably 1:2 to 2:1.

All ratios are weight ratios on an active basis. The total amount of quaternary ammonium compound(s) and each compound a) - e) specified in the respective definition is to be taken into account.

<u>a) Carrier Oil</u>

The carrier oil may have any suitable molecular weight. A preferred molecular weight is in the range 500 to 5000.

In one embodiment the carrier oil may comprise an oil of lubricating viscosity. The oil of lubricating viscosity includes natural or synthetic oils of lubricating viscosity, oil derived from hydrocracking, hydrogenation, hydrofinishing, unrefined, refined and re-refined oils, or mixtures thereof.

In another embodiment the carrier oil may comprise a polyether carrier oil.

In a preferred embodiment the carrier oil is a polyalkyleneglycol monoether of the formula:

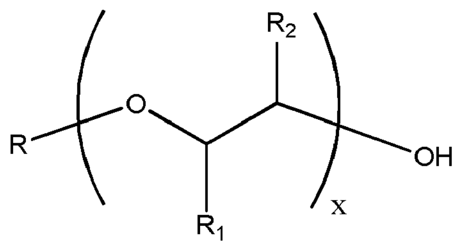

(C1)

where R is a hydrocarbyl group having from 1 to 30 carbon atoms; R1 and R2 are each independently hydrogen or lower alkyl having from about 1 to about 6 carbon atoms and each $R_1$ and $R_2$ is independently selected in each --O-CHR$_1$ -CHR$_2$ -- unit; and x is an integer of from 5 to 100, preferably 10 to 50, preferably 10 to 30, preferably 10-25, more preferably 12 to 25, more preferably 12 to 20.

In a preferred embodiment R is a straight chain $C_1$-$C_{30}$ alkyl, preferably $C_4$-$C_{20}$ alkyl, preferably $C_8$-$C_{18}$ alkyl, and more preferably $C_{12}$-$C_{18}$ alkyl or $C_8$-$C_{14}$ alkyl.

In another preferred embodiment R is an alkylphenyl group preferably an alkylphenyl group, wherein the alkyl moiety is a straight or branched chain alkyl of from about 1 to about 24 carbon atoms.

Preferably, one of $R_1$ and $R_2$ is lower alkyl of 1 to 4 carbon atoms, and the other is hydrogen. More preferably, one of $R_1$ and $R_2$ is methyl or ethyl, and the other is hydrogen.

In a preferred embodiment the carrier oil is a polypropyleneglycol monoether of the formula (C1) wherein R, and x are as defined above, and in each repeat unit one of $R_1$ and $R_2$ are hydrogen and the other is methyl.

In a further aspect the polyalkyleneglycol may be an ester. In this aspect the carrier oil may be a polypropyleneglycol monoester of the formula

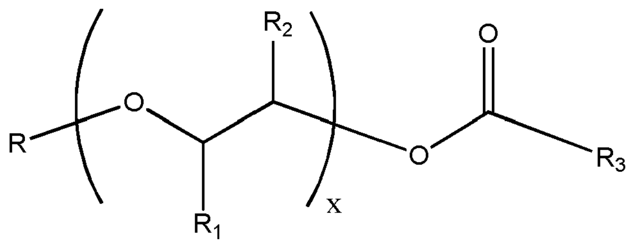

(C2)

where R, $R_1$, $R_2$ and x are as defined for (C1) above and $R_3$ is a $C_1$-$C_{30}$ hydrocarbyl group, preferably an aliphatic hydrocarbyl group, and more preferably $C_1$-$C_{10}$ alkyl.

e) polyetheramine

It is known to those skilled in the art that the class of compounds known as polyetheramines function as deposit control additives. It is common for polyetheramines to be used as detergents and/or as carrier oils.

Suitable hydrocarbyl-substituted polyoxyalkylene amines or polyetheramines employed in the present invention are described in the literature (for example US 6217624 and US 4288612) and have the general formula:

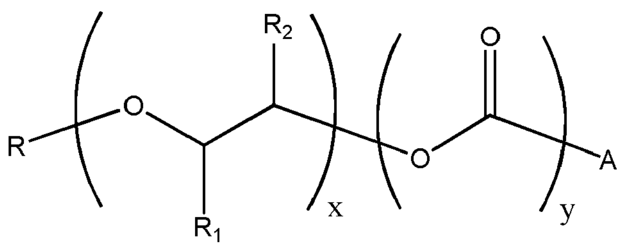

(C4)

or a fuel-soluble salt thereof; R, $R_1$, $R_2$ and x are as defined for (C1) above; A is amino, N-alkyl amino having about 1 to about 20 carbon atoms in the alkyl group, N,N-dialkyl amino having about 1 to about 20 carbon atoms in each alkyl group, or a polyamine moiety having about 2 to about 12 amine nitrogen atoms and about 2 to about 40 carbon atoms; and y is 0 or 1.

In general, A is amino, N-alkyl amino having from about 1 to about 20 carbon atoms in the alkyl group, preferably about 1 to about 6 carbon atoms, more preferably about 1 to about 4 carbon atoms; N,N-dialkyl amino having from about 1 to about 20 carbon atoms in each alkyl group, preferably about 1 to about 6 carbon atoms, more preferably about 1 to about 4 carbon atoms; or a polyamine moiety having from about 2 to about 12 amine nitrogen atoms and from about 2 to about 40 carbon atoms, preferably about 2 to 12 amine nitrogen atoms and about 2 to 24 carbon atoms. More preferably, A is amino or a polyamine moiety derived from a (poly)alkylene polyamine, including alkylene diamine. Most preferably, A is amino or a polyamine moiety derived from ethylene diamine or diethylene triamine.

The polyetheramines will generally have a molecular weight in the range from about 600 to about 10,000.

Other suitable polyetheramines are those taught in US 5089029 and US 5112364.

b) Acylated nitrogen compounds which are the reaction product of a carboxylic acid-derived acylating agent and an amine

The carboxylic derived acylating agent may be a hydrocarbyl substituted acylating agent as described for the quaternary ammonium salt(s) (i).

Amines useful for reaction with these acylating agents include the following:

(1) (poly)alkylene polyamines of the general formula:

$$(R^3)_2N[U-N(R^3)]_nR^3$$

wherein each $R^3$ is independently selected from a hydrogen atom, a hydrocarbyl group or a hydroxy-substituted hydrocarbyl group containing up to about 30 carbon atoms, with proviso that at least one $R^3$ is a hydrogen atom, n is a whole number from 1 to 10 and U is a C1-18 alkylene group. Preferably each $R^3$ is independently selected from hydrogen, methyl, ethyl, propyl, isopropyl, butyl and isomers thereof. Most preferably each $R^3$ is ethyl or hydrogen. U is preferably a C1-4 alkylene group, most preferably ethylene.

Specific examples of (poly)alkylene polyamines (1) include ethylenediamine, diethylenetriamine, triethylenetetramine, tetraethylenepentamine, tri(tri-methylene)tetramine, pentaethylenehexamine, hexaethylene-heptamine, 1,2-propylenediamine, and other commercially available materials which comprise complex mixtures of polyamines. For example, higher ethylene polyamines optionally containing all or some of the above in addition to higher boiling fractions containing 8 or more nitrogen atoms etc.

Specific examples of (poly)alkylene polyamines (1) which are hydroxyalkyl-substituted polyamines include N-(2-hydroxyethyl) ethylene diamine, N,N' -bis(2-hydroxyethyl) ethylene diamine, N-(3-hydroxybutyl) tetramethylene diamine, etc.

(2) heterocyclic-substituted polyamines including hydroxyalkyl-substituted polyamines wherein the polyamines are as described above and the heterocyclic substituent is selected from nitrogen-containing aliphatic and aromatic heterocycles, for example piperazines, imidazolines, pyrimidines, morpholines, etc.

(3) aromatic polyamines of the general formula:

$$Ar(NR^3{}_2)_y$$

wherein Ar is an aromatic nucleus of 6 to 20 carbon atoms, each $R^3$ is as defined above including the proviso that at least one R3 is a hydrogen atom and y is from 2 to 8.

4) The amine reactant may alternatively be a compound of general formula $R^3{}_3N$ wherein each $R^3$ is as defined in (1) above including the proviso that at least one R3 is a hydrogen atom.

Further amines which may be used in this invention include amines selected from ammonia, butylamine, aminoethylethanolamine, aminopropan-2-ol, 5-aminopentan-1-ol, 2-(2-aminoethoxy)ethanol, monoethanolamine, 3-aminopropan-1-ol, 2-((3-aminopropyl)amino)ethanol, dimethylaminopropylamine, and N-(alkoxyalkyl)-alkanediamines including N-(octyloxyethyl)-1,2-diaminoethane and N-(decyloxypropyl)-N-methyl-1,3-diaminopropane.

Many patents have described useful acylated nitrogen compounds including U.S. Pat. Nos. 3,172,892; 3,219,666; 3,272,746; 3,310,492; 3,341,542; 3,444,170; 3,455,831; 3,455,832; 3,576,743; 3,630,904; 3,632,511; 3,804,763, 4,234,435 and US6821307.

A preferred acylated nitrogen compound of this class is that made by reacting a poly(isobutene)-substituted succinic acid-derived acylating agent (e.g., anhydride, acid, ester, etc.) wherein the poly(isobutene) substituent has

between about 12 to about 200 carbon atoms and the acylating agent has from 1 to 2, preferably predominantly 1 succinic-derived acylating groups; with a mixture of ethylene polyamines having 3 to about 9 amino nitrogen atoms, preferably about 3 to about 8 nitrogen atoms, per ethylene polyamine and about 1 to about 8 ethylene groups. These acylated nitrogen compounds are formed by the reaction of a molar ratio of acylating agent : amino compound of from 10:1 to 1:10, preferably from 5:1 to 1:5, more preferably from 2.5:1 to 1:2, more preferably from 2:1 to 1:2 and most preferably from 2:1 to 1:1. In especially preferred embodiments, the acylated nitrogen compounds are formed by the reaction of acylating agent to amino compound in a molar ratio of from 1.8:1 to 1:1.2, preferably from 1.6:1 to 1:1.2, more preferably from 1.4:1 to 1:1.1 and most preferably from 1.2:1 to 1:1. This type of acylated amino compound and the preparation thereof is well known to those skilled in the art and are described in the above-referenced US patents. In other especially preferred embodiments, the acylated nitrogen compounds are formed by the reaction of acylating agent to amino compound in a molar ratio of from 2.5:1 to 1.5:1, preferably from 2.2:1 to 1.8:1.

Preferred acylated nitrogen compounds for use herein include: the compound formed by reacting a polyisobutylene succinic anhydride (PIBSA) having a PIB molecular weight of 900 to 1100, for example approximately 1000 with aminoethyl ethanolamine or triethylene tetramine; and the compound formed by reacting a PIBSA having a PIB molecular weight of 650 to 850, for example about 750 with tetraethylene pentamine. In each case the ratio of PIBSA to amine is from 1.5:1 to 0.9:1, preferably from 1.2:1 to 1:1. Other preferred acylated nitrogen compounds for use herein include: the compound formed by reacting a polyisobutylene succinic anhydride (PIBSA) having a PIB molecular weight of 900 to 1100, for example approximately 1000 with tetraethylene pentamine, the ratio of PIBSA to amine being from 2.5:1 to 1.5:1, preferably from 2.2:1 to 1.8:1.

c) Hydrocarbyl-Substituted Amines

Hydrocarbyl-substituted amines suitable for use in the present invention are well known to those skilled in the art and are described in a number of patents. Among these are U.S. Pat. Nos. 3,275,554; 3,438,757; 3,454,555; 3,565,804; 3,755,433 and 3,822,209. These patents describe suitable hydrocarbyl amines for use in the present invention including their method of preparation.

d) Mannich Additives

The Mannich additives comprise nitrogen-containing condensates of a phenol, aldehyde and primary or secondary amine. Suitable phenols and aldehydes are as described in relation to nitrogen containing species (ii) a Mannich reaction product comprising a tertiary amine group described above.

The amine used to form the Mannich Additive (d) can be a monoamine or a polyamine.

Examples of monoamines include but are not limited to ethylamine, dimethylamine, diethylamine, n-butylamine, dibutylamine, allylamine, isobutylamine, cocoamine, stearylamine, laurylamine, methyllaurylamine, oleylamine, N-methyl-octylamine, dodecylamine, diethanolamine, morpholine, and octadecylamine.

Suitable polyamines may be selected from any compound including two or more amine groups. Suitable polyamines include polyalkylene polyamines, for example in which the alkylene component has 1 to 6, preferably 1 to 4, most preferably 2 to 3 carbon atoms. Preferred polyamines are polyethylene polyamines.

The polyamine has 2 to 15 nitrogen atoms, preferably 2 to 10 nitrogen atoms, more preferably 2 to 8 nitrogen atoms. In especially preferred embodiments the amine used to form the Mannich detergent comprises a diamine.

Polyamines may be selected from any compound including two or more amine groups. Preferably the polyamine is a (poly)alkylene polyamine (by which is meant an alkylene polyamine or a polyalkylene polyamine; including in each case a diamine, within the meaning of "polyamine"). Preferably the polyamine is a (poly)alkylene polyamine in which the alkylene component has 1 to 6, preferably 1 to 4, most preferably 2 to 3 carbon atoms. Most preferably the polyamine is a (poly) ethylene polyamine (that is, an ethylene polyamine or a polyethylene polyamine).

Preferably the polyamine has 2 to 15 nitrogen atoms, preferably 2 to 10 nitrogen atoms, more preferably 2 to 8 nitrogen atoms.

The polyamine may, for example, be selected from ethylenediamine, dimethyl amino propylamine, diethylenetriamine, triethylenetetramine, tetraethylenepentamine, pentaethylenehexamine, hexaethyleneheptamine, heptaethyleneoctamine, propane-1,2-diamine, 2(2-aminoethylamino)ethanol, and N',N'-bis (2-aminoethyl) ethylenediamine ($N(CH_2CH_2NH_2)_3$). Most preferably the polyamine comprises tetraethylenepentamine or ethylenediamine. Preferred mannich additives of this type are described in US5876468.

Commercially available sources of polyamines typically contain mixtures of isomers and/or oligomers, and products prepared from these commercially available mixtures fall within the scope of the present invention.

In some preferred embodiments, the primary or secondary amine has only one reactive primary or secondary amine group. Such amines include the monoamines as described above, particularly secondary monoamines and polyamines having only one reactive primary or secondary amine group such as dialkyl alkylene diamines. Preferred

mannich additives of this type are described in US5725612, US5634951 and US6800103.

The fuels compositions of the invention may contain, in addition to the quaternary ammonium salts additive(s) and the gasoline, and the other components a) - e) described above when present, unreacted raw materials and other reaction products and any of the other additives conventionally added to gasoline as, for example, other detergents, dispersants, anti-oxidants, anti-icing agents, metal deactivators, lubricity additives, friction modifiers, dehazers, corrosion inhibitors, dyes, markers, octane improvers, anti-valve-seat recession additives, stabilisers, demulsifiers, antifoams, odour masks, conductivity improvers, combustion improvers, etc.

[Move to front of section]

Such further ingredients could in principle be added separately to the quaternary ammonium compound(s) but it is preferred for reasons of convenience and consistency of dosing to include all additives in a common additive composition.

In preferred embodiments the fuel compositions of the invention contain the quaternary ammonium salts additive and one or more of a detergent, a friction modifier and a carrier.

Suitably the fuel compositions of the invention contain the quaternary ammonium salts additive and two or more of a detergent, a friction modifier and a carrier.

Preferably the fuel compositions of the invention contain the quaternary ammonium salts additive a detergent, a friction modifier and a carrier.

Preferably the quaternary ammonium compounds and further additives (when present) is/are present in the fuel in the fuel storage tank which supplies the engine. Although they could be mixed into the fuel in the storage tank, preferably they are present in bulk fuel which is pumped into the storage tank.

The quaternary ammonium salt additives may be added to gasoline fuel at any convenient place in the supply chain. For example, the additives may be added to fuel at the refinery, at a distribution terminal or after the fuel has left the distribution terminal. If the additive is added to the fuel after it has left the distribution terminal, this is termed an aftermarket application. Aftermarket applications include such circumstances as adding the additive to the fuel in the delivery tanker, directly to a customer's bulk storage tank, or directly to the end user's vehicle tank. Aftermarket applications may include supplying the fuel additive in small bottles suitable for direct addition to fuel storage tanks or vehicle tanks.

The present invention relates to improving the reducing particulate emissions from a direct injection spark ignition engines by combusting gasoline fuel compositions comprising a quaternary ammonium salt additive.

By reducing particulate emissions we mean that the level of particulates released via the exhaust stream of a direct injection spark ignition on combustion of a gasoline fuel comprising the additive is lower than that achieved on combustion of the same fuel without the additive in the same engine.

The level of particulates released via the exhaust stream may be measured by any suitable means and such means will be known to the person skilled in the art. Suitably the number of particulates in a given volume of exhaust gas is counted.

One preferred method by which particulate emissions may be measured is described in example 3.

As well as reducing the number of particulates emitted, the present invention preferably also reduces the total mass of particulates emitted.

In some embodiments the present invention reduces the number of particulates emitted per unit volume of exhaust gas.

In some embodiments the present invention reduces the total mass of particulates emitted per unit volume of exhaust gas.

In some embodiments the present invention reduces the total mass and the number of particulates emitted per unit volume of exhaust gas.

The present invention reduces particulate emissions from a direct injection spark ignition engine. In some embodiments the exhaust gases from the engine may be directed through a particulate filter. In such embodiments the present invention may advantageously reduce the level of particulates in the exhaust gases which pass through the filter. As a result this may extend the life of the particulate filter and/or increase the maintenance intervals and/or increase regeneration intervals.

Thus the present invention may provide the use of a quaternary ammonium compound as an additive in a gasoline fuel composition to improve the performance of a particulate filter fitted to the exhaust of a direct injection spark ignition engine wherein the improvement in performance is selected from:

- increased longevity;
- an increase in maintenance intervals; and
- an increase in regeneration intervals.

The invention will now be further described with reference to the following non-limiting examples. In the examples which follow the values given in parts per million (ppm) for treat rates denote active agent amount, not the amount of a formulation as added, and containing an active agent. All parts per million are by weight.

**Example 1**

Intermediate Additive A, the reaction product of a hydrocarbyl substituted acylating agent and a compound of formula (B1) was prepared as follows:
554.36g (0.467 moles) PIBSA (made from 1000 MW PIB and maleic anhydride) was charged to 1 litre vessel. The mixture was stirred and heated, under nitrogen to 120°C. 47.72g (0.467 moles) DMAPA was added over 1 hour and the mixture heated to 140°C for 3 hours, with concurrent removal of water using a Dean-Stark apparatus.
[Note: PIB herein means polyisobutene; PIBSA means polyisobutenyl-substituted succinic anhydride; DMAPA means dimethylaminopropylamine ]

**Example 2**

Additive B, an additive comprising a quaternary ammonium salt additive of the present invention was prepared as follows:
333.49g (0.262 moles) of Additive A mixed with 39.92 (0.262 moles) methyl salicylate under nitrogen. The mixture was stirred and heated to 140°C for 8 hours. The non-volatile content was adjusted to 60% w/w with Caromax 20. The product mixture of this reaction was used without further processing as additive B and contained the quaternary ammonium salt(s) additive of the present invention, together with any unreacted raw materials, other reaction products and solvent.

**Example 3**

Gasoline compositions were prepared comprising the additives listed in Table 2, added to aliquots all drawn from a common batch of RF83-8-91 reference fuel.
Table 1 below shows the specification for the RF83-8-91 reference fuel.

| ANALYSES | SPECIFICATIONS | RESULTS | METHODS |
|---|---|---|---|
| Low calorific value calculated<br>C/H ratio | -<br>- | **42.89** MJ/kg<br>**6.770** | GC-Calculated |
| Induction period | ≥480 | **>528** minutes | NF EN ISO 7536 |
| Washed existent gums content | ≤4 | **<1** mg/100mL | NF EN ISO 6246 |
| Phosphorus content | ≤0.0013 | ***<0.0013*** g/L | ASTM D 3231 |
| Lead content | ≤0.005 | **<0.005** g/L | ASTM D 3237 |
| Copper corrosion 3h, 50°C | 1a - 1b | 1b | NF EN ISO 2160 |
| Density at 15°C | 745.0 - 765.0 | **753.2** kg/m$^3$ | ASTM D 1298 |
| Vapour pressure | 550 - 650 mbar | **605** mbar | ISO 3007 |
| IP<br>5 % Vol<br>10 % Vol<br>20 % Vol<br>30 % Vol<br>40 % Vol<br>50 % Vol<br>60 % Vol<br>70 % Vol<br>80 % Vol<br>90 % Vol<br>95 % Vol<br>FP | 24.0 - 40.0<br>-<br>42.0 - 58.0<br>-<br>-<br>-<br>90.0 - 110.0<br>-<br>-<br>-<br>155.0 - 180.0<br>-<br>190.0 - 215.0 | **33.6** °C<br>**46.9** °C<br>**52.4** °C<br>**60.2** °C<br>**70.4** °C<br>**85.6** °C<br>**103.4** °C<br>**114.9** °C<br>**123.9** °C<br>**140.0** °C<br>**173.4** °C<br>**189.0** °C<br>**197.3** °C | ASTM D 86 |

(continued)

| ANALYSES | SPECIFICATIONS | RESULTS | METHODS |
|---|---|---|---|
| Residue<br>Losses<br>E 70 °C<br>E 100 °C<br>E 150 °C<br>E 180 °C | ≤2.0<br>-<br>-<br>-<br>-<br>- | **0.7** % (v/v)<br>**2.2** % (v/v)<br>**30.0** % (v/v)<br>**48.2** % (v/v)<br>**83.4** % (v/v)<br>**92.2** % (v/v) | |
| saturates content<br>Olefin content<br>Aromatics content<br>Oxygen content | -<br>10.0 - 14.0<br>≤45.0<br>≤0.1 | **49.7** % (v/v)<br>**12.1** % (v/v)<br>**38.2** % (v/v)<br>**<0.1** % (m/m) | NF M 07-086 |
| Benzene content | ≤5.0 | **0.4** % (v/v) | ASTM D 3606 |
| Research octane number | ≥95.0 | **97.5** index | NF EN ISO 5164 |
| Motor octane number | ≥85.0 | **85.7** index | NF EN ISO 5163 |
| Sulfur content | ≤400 | **0.8** mg/kg | ASTM D 4294 |

The compositions listed in table 2 were prepared and the particulate emissions were measured as follows:
A vehicle test was carried out on a chassis dynamometer test bench with a BMW B48 direct injection spark ignition engine. The vehicle used was a mini Cooper S with a turbocharger and an engine capacity of 1998 ccm. The engine was run at a constant speed of 3500 rpm for 24 hours.

The particle and emission measuring system is directly connected to the tailpipe of the vehicle. The unit consists of an exhaust gas flow meter (AVL EFM), a gas emission measuring unit (AVL GAS PEMS) and a particle counter (AVL PN PEMS).

Once the gas flow leaves the tailpipe it directly enters the exhaust flow meter and the passes a probe which extracts the required gas volume for further analysis in the gas emission measuring unit and the particle counter. The remaining gas flow is then released to the open and removed by the exhaust ventilation system. Prior to each test the system runs a calibration procedure which is required to ensure that measuring deviations between tests remains as small as possible. The whole unit is a system provided by AVL which can also be used on the open road for testing. For handling on the test bench it is mounted inside the vehicle with a rack.

To arrive at the final number in the table the following formula is used:

$$PE=(PN \cdot EF\ vol \cdot 1000000)/(v/3600)$$

Where:

PE...Particle Emission in #/km
PN...Particle Number in #/cm$^3$
EF vol...Exhaust flow volume in m$^3$/s
v...Vehicle speed in km/h

The amounts are ppm by weight of total additive (non-volatiles) dosed into the gasoline base fuel.

**Table 2**

| Composition | Additive B (mg/kg) | Additive C (mg/kg) | Additive D (mg/kg) | Additive E (mg/kg) | Particulates (#/cm$^3$) |
|---|---|---|---|---|---|
| Basefuel C | - | - | - | - | $3.4 \times 10^7$ |
| 1 | 250 (150) | - | - | - | $9.1 \times 10^3$ |
| 2 | 150 (90) | - | - | - | $5.6 \times 10^4$ |
| 3 | 50 (30) | - | - | - | $1.1 \times 10^7$ |

(continued)

| Composition | Additive B (mg/kg) | Additive C (mg/kg) | Additive D (mg/kg) | Additive E (mg/kg) | Particulates (#/cm$^3$) |
|---|---|---|---|---|---|
| 4 (comparative) | - | 1200 | - | - | $2.3 \times 10^7$ |
| 5 (comparative) | - | - | 500 | - | $1.6 \times 10^7$ |
| 6 (comparative) | - | - | - | 500 | $3.0 \times 10^7$ |

Additive C (comparative) is a fully formulated commercial gasoline fuel additive package comprising polyisobutenyl succinimide (PIBSI) detergent.

Additive D (comparative) is a fully formulated commercial gasoline fuel additive package comprising a Mannich detergent.

Additive E (comparative) is a fully formulated commercial gasoline fuel additive package comprising a polyisobutenamine detergent.

The above results are also presented in figure 1.

## Claims

1. A method of reducing particulate emissions from a direct injection spark ignition engine, the method comprising combusting in the engine a gasoline composition comprising as an additive a quaternary ammonium compound.

2. The use of a quaternary ammonium compound as an additive in a gasoline composition to reduce particulate emissions from a direct injection spark ignition engine.

3. A method or use according to claim 1 or 2 wherein the quaternary ammonium compound is the reaction product of a nitrogen-containing species having at least one tertiary amine group and a quaternising agent wherein the nitrogen-containing species having at least one tertiary amine group may be selected from:

   (i) the reaction product of a hydrocarbyl-substituted acylating agent and a compound comprising at least one tertiary amine group and a primary amine, secondary amine or alcohol group;
   (ii) a Mannich reaction product comprising a tertiary amine group;
   (iii) a polyalkylene substituted amine having at least one tertiary amine group;
   (iv) a tertiary amine of formula $R^1R^2R^3N$, wherein each of $R^1$, $R^2$ and $R^3$ is independently an optionally substituted alkyl, alkenyl or aryl group; and
   (v) a cyclic tertiary amine.

4. A method or use according to claim 3 wherein the nitrogen-containing species having at least one tertiary amine group is the reaction product of an alcohol or amine including a tertiary amino group and an optionally substituted succinic acid or anhydride thereof.

5. A method or use according to claim 4 wherein the succinic acid or anhydride thereof is substituted with a polyisobutenyl group having a number average molecular weight of from 170 to 2800, preferably 450 to 1500.

6. A method or use according to claim 3 or claim 4 wherein the alcohol or amine including a tertiary amino group is selected from dimethylaminopropanol, dimethylaminopropylamine, N,N-diethyl-1,3- diaminopropane, N,N-dimethylethylenediamine, N,N-diethylethylenediamine, N,N-dibutylethylenediamine, or combinations thereof.

7. A method or use according to any of claims 3 to 6 wherein the quaternising agent is selected from an ester of a carboxylic acid, epoxides optionally in combination with an acid, dialkyl sulfates, benzyl halides, hydrocarbyl substituted carbonates, alkyl halides, alkyl sulfonates, sultones, hydrocarbyl substituted phosphates, hydrocarbyl substituted borates, alkyl nitrites, alkyl nitrates, hydroxides, N-oxides or mixtures thereof, followed by an anion exchange reaction.

**8.** A method or use according to claim 7 wherein the quaternising agent is an ester of formula $R^5COOR^0$ wherein R° is a $C_1$ to $C_7$ alkyl group and $R^5$ is the residue of a carboxylic acid selected from a substituted aromatic carboxylic acid, an α-hydroxycarboxylic acid and a polycarboxylic acid; suitably wherein the quaternising agent is an ester of a carboxylic acid selected from one or more of oxalic acid, phthalic acid, salicylic acid, maleic acid, malonic acid, citric acid, nitrobenzoic acid, aminobenzoic acid and 2, 4, 6-trihydroxybenzoic acid.

**9.** A method or use according to claim 8 wherein the quaternising agent is selected from dimethyl oxalate, methyl 2-nitrobenzoate, dimethylphthalate, dimethyltartrate and methyl salicylate

**10.** A method or use according to claim 7 wherein the quaternising agent is selected from epoxides, optionally in combination with an acid, wherein the epoxide has the formula:

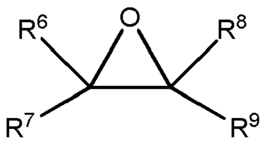

wherein each of $R^6$, $R^7$, $R^8$, $R^9$ is independently selected from hydrogen or an optionally substituted alkyl, alkenyl or aryl group, provided at least one of $R^6$, $R^7$, $R^8$ and $R^9$ is hydrogen; suitably wherein each of $R^6$, $R^7$ and $R^8$ is hydrogen and $R^9$ is selected from phenyl, an optionally substituted alkyl or alkenyl group having 1 to 20 carbon atoms, hydrogen, $CH_2OR^{10}$ or $CH_2OCOR^{11}$ wherein each of $R^{10}$ and $R^{11}$ is an optionally substituted alkyl or aryl group having from 1 to 20 carbon atoms.

**11.** A method or use according to claim 10 wherein the epoxide is selected from styrene oxide, ethylene oxide, propylene oxide, butylene oxide, stilbene oxide and isopropyl glycidyl ether.

**12.** A method or use according to any of claims 7, 10 or 11 wherein the epoxide quaternising agents are used in combination with an acid; suitably wherein the acid is selected from:

- a small simple acid selected from formic acid, acetic acid, propionic acid and butyric acid;
- a fatty acid compound; and
- a hydrocarbyl substituted phthalic acid or succinic acid derivative.

**13.** A method or use according to any preceding claim wherein the gasoline composition further comprises one or more additional components selected from:

a) carrier oils
b) acylated nitrogen compounds which are the reaction product of a carboxylic acid-derived acylating agent and an amine
c) hydrocarbyl-substituted amines wherein the hydrocarbyl substituent is substantially aliphatic and contains at least 8 carbon atoms
d) mannich base additives comprising nitrogen-containing condensates of a phenol, aldehyde and primary or secondary amine; and
e) aromatic esters of a polyalkylphenoxyalkanol.

**14.** A method or use according to any preceding claim which reduces the number of particulates emitted per unit volume of exhaust gas and /or the total mass of particulates emitted per unit volume of exhaust gas.

**15.** The use of a quaternary ammonium compound as an additive in a gasoline fuel composition to improve the performance of a particulate filter fitted to the exhaust of a direct injection spark ignition engine wherein the improvement in performance is selected from:

- increased longevity;
- an increase in maintenance intervals; and
- an increase in regeneration intervals.

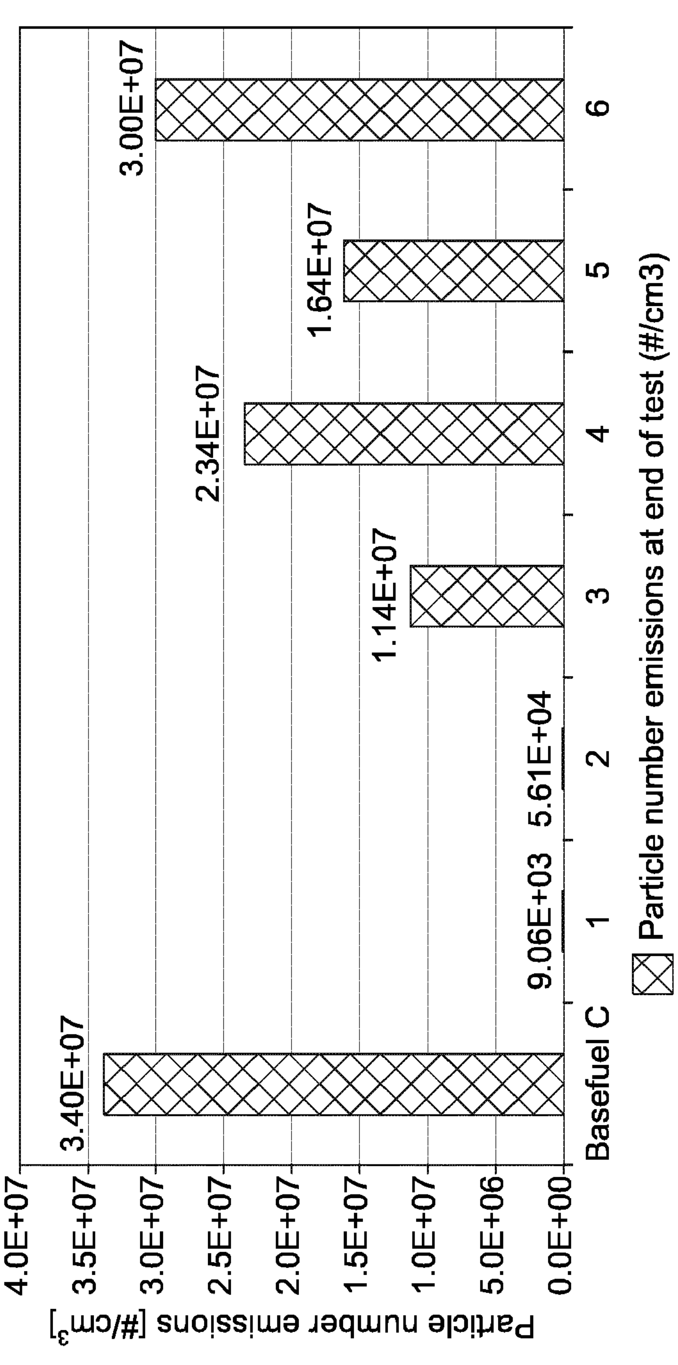
Particle number emissions [#/cm3]
4.0E+07
3.5E+07
3.0E+07
2.5E+07
2.0E+07
1.5E+07
1.0E+07
5.0E+06
0.0E+00
3.40E+07
9.06E+03
5.61E+04
1.14E+07
2.34E+07
1.64E+07
3.00E+07
Basefuel C
1
2
3
4
5
6
Particle number emissions at end of test (#/cm3)

*FIG. 1*

Europäisches Patentamt
European Patent Office
Office européen des brevets

# EUROPEAN SEARCH REPORT

Application Number
EP 22 17 0861

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/141731 A1 (INNOSPEC LTD [GB]; BURGESS VINCE [GB] ET AL.) 17 November 2011 (2011-11-17) * claim 15; ex. 2-3 * | 1,3-9, 13,14 | INV. C10L1/222 C10L1/2383 C10L10/02 |
| X | EP 2 796 534 A1 (AFTON CHEMICAL CORP [US]) 29 October 2014 (2014-10-29) * claims 1-2, 5-8, 10, 12; tab. 2 * | 1,3,7, 10-14 | |
| X | WO 2018/015665 A1 (TOTAL MARKETING SERVICES [FR]) 25 January 2018 (2018-01-25) * claims 10, 14-16; ex. 1-2; p. 37, l. 10-11 * | 1-3,7, 13,15 | |
| A | WENBIN ZHANG ET AL: "Effect of Fuel Detergent on Injector Deposit Formation and Engine Emissions in a Gasoline Direct Injection (GDI) Engine", SAE TECHNICAL PAPER SERIES, vol. 1, 8 October 2017 (2017-10-08), XP055592394, US ISSN: 0148-7191, DOI: 10.4271/2017-01-2247 * abstract; fig. 9, 15; conclusions * | 1-15 | TECHNICAL FIELDS SEARCHED (IPC) C10L |
| A | WO 2016/038130 A1 (BP OIL INT [GB]; ALLAN ROBERT EDWARD [GB] ET AL.) 17 March 2016 (2016-03-17) * claims 2,5,6; figure 1 * | 1-15 | |

The present search report has been drawn up for all claims

1

| Place of search | Date of completion of the search | Examiner |
|---|---|---|
| Munich | 14 September 2022 | Greß, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 17 0861

This annex lists the patent family members relating to the patent documents cited in the above-mentioned European search report. The members are as contained in the European Patent Office EDP file on
The European Patent Office is in no way liable for these particulars which are merely given for the purpose of information.

14-09-2022

| Patent document cited in search report | Publication date | Patent family member(s) | Publication date |
|---|---|---|---|
| WO 2011141731 A1 | 17-11-2011 | AR 081385 A1 | 29-08-2012 |
| | | AU 2011251787 A1 | 06-12-2012 |
| | | BR 112012028637 A2 | 09-08-2016 |
| | | CA 2799279 A1 | 17-11-2011 |
| | | CN 102939363 A | 20-02-2013 |
| | | EP 2569402 A1 | 20-03-2013 |
| | | EP 2578667 A1 | 10-04-2013 |
| | | ES 2661232 T3 | 28-03-2018 |
| | | ES 2671776 T3 | 08-06-2018 |
| | | JP 2013529235 A | 18-07-2013 |
| | | KR 20130107205 A | 01-10-2013 |
| | | MY 160745 A | 15-03-2017 |
| | | RU 2012149854 A | 20-06-2014 |
| | | SG 185532 A1 | 28-12-2012 |
| | | TR 201807297 T4 | 21-06-2018 |
| | | US 2013104826 A1 | 02-05-2013 |
| | | US 2015034036 A1 | 05-02-2015 |
| | | US 2017121622 A1 | 04-05-2017 |
| | | WO 2011141731 A1 | 17-11-2011 |
| | | ZA 201208578 B | 29-01-2014 |
| EP 2796534 A1 | 29-10-2014 | AR 096129 A1 | 09-12-2015 |
| | | BR 102014008341 A2 | 20-10-2015 |
| | | CN 104119969 A | 29-10-2014 |
| | | EP 2796534 A1 | 29-10-2014 |
| | | KR 20140128254 A | 05-11-2014 |
| | | US 2014318486 A1 | 30-10-2014 |
| WO 2018015665 A1 | 25-01-2018 | EP 3487892 A1 | 29-05-2019 |
| | | FR 3054224 A1 | 26-01-2018 |
| | | WO 2018015665 A1 | 25-01-2018 |
| WO 2016038130 A1 | 17-03-2016 | AU 2015314193 A1 | 23-03-2017 |
| | | CN 107207979 A | 26-09-2017 |
| | | EP 3191568 A1 | 19-07-2017 |
| | | US 2017253820 A1 | 07-09-2017 |
| | | WO 2016038130 A1 | 17-03-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3361673 A
- US 3018250 A
- US 3172892 A
- GB 949981 A
- EP 0565285 A
- EP 1344785 A
- WO 2007015080 A
- US 9365787 B
- US 20080052985 A
- US 20080113890 A
- US 2013225463 A
- EP 1254889 A
- US 3024913 A
- US 6217624 B
- US 4288612 A
- US 5089029 A
- US 5112364 A
- US 3219666 A
- US 3272746 A
- US 3310492 A
- US 3341542 A
- US 3444170 A
- US 3455831 A
- US 3455832 A
- US 3576743 A
- US 3630904 A
- US 3632511 A
- US 3804763 A
- US 4234435 A
- US 6821307 B
- US 3275554 A
- US 3438757 A
- US 3454555 A
- US 3565804 A
- US 3755433 A
- US 3822209 A
- US 5876468 A
- US 5725612 A
- US 5634951 A
- US 6800103 B